# EUROPEAN PATENT APPLICATION

(11) **EP 0 765 101 A2**
(43) Date of publication of application: **26.03.1997**
(21) Application number: 96115140.4
(22) Date of filing: 20.09.1996
(51) Int. Cl.: H04Q 11/04, H04L 12/56

(54) **Switching apparatus, multicast- and multiconnection call control method**

(30) Priority: 22.09.1995 JP 244647/95; 27.11.1995 JP 307335/95
(71) Applicant: FUJITSU LIMITED, Kawasaki-shi, Kanagawa 211 (JP)
(72) Inventor: Wakamoto, Masaaki, c/o Fujitsu Ltd., Kawasaki-shi, Kanagawa 211 (JP); Furutono, Tomoyuki, c/o Fujitsu Ltd., Fukuoka-shi , Fukuoka (JP); Fukuzawa, Mitsunori, c/o Fujitsu Ltd., Kawasaki-shi, Kanagawa 211 (JP)
(74) Representative: Ritter und Edler von Fischern, Bernhard, Dipl.-Ing.

(57) **Abstract**

To effectively set multiconnection calls and multicast calls, when a request is issued to setup the multiconnection calls and the multicast calls, a call control scenario instance for controlling a call level based upon a call control scenario is produced. Under control of this call control scenario instance, a connection control scenario instance for actually controlling the respective connections contained in the call is produced from the connection control scenario.

## Description

### BACKGROUND OF THE INVENTION

The present invention generally relates to a switching apparatus, a multicast call control method, and a multiconnection call control method. More specifically, the present invention is directed to a switching apparatus having a multicast function and a multiconnection function, capable of effectively setting multiconnection calls and multicast calls.

A multicast function corresponds to such a function that information such as voice and images transmitted from an information sender (or switching unit) is copied in a switching unit, and then the copied information is distributed to a plurality of information receivers (or plural switching units). This multicast function may be applied to "near video on demand (NVOD)" services and the like. On the other hand, a multiconnection function corresponds to such a function that a plurality of communication channels are combined with each other in a proper unit for control purposes. This multiconnection function may be applied to TV conferences and TV phones, in which moving pictures and sound are required at the same time.

In a multiconnection, when pathes of the respective connections are different from each other, there are differences in delay times of information transmissions. Under such circumstances, ITU-T (International Telecommunication Union-Telecommunication Standardization Section) has discussed to employ CGLID (Connection Group Link Identifier) in order to consider the pathes of the respective connections in the multiconnection. As a result, it is expected that call/connection controls capable of handling CGLID can be executed in switching units. Also, it is expected for switching units that call/connection controls capable of handling CGID (Connection Group Identifier) can be performed, and this CGID is such information used to group a plurality of connections within a single call in a proper unit.

On the other hand, when either a multicast function or a multiconnection function is realized in a conventional switching apparatus, a single call control program is initiated every single call. This call control program manages all of necessary data for managing calls as call information data.

As a consequence, when the multicast function and/or the multiconnection function are realized in the conventional switching apparatus for performing the above-described managing method, there are the following problems. That is, the call state management becomes complex, and the effective memory utilization can be hardly achieved.

### SUMMARY OF THE INVENTION

Therefore, an object of the present invention is to provide technical proposals capable of effectively setting multiconnection calls and multicast calls.

A switching apparatus, according to a first aspect of the present invention (referred to as a "first switching apparatus" hereinafter), corresponds to such a switching apparatus for setting multicast calls among a root terminal corresponding to an information sending source terminal, and a plurality of leaf terminals corresponding to information receiving terminals. The first switching apparatus includes a switch unit for performing an information switching function and an information copying function: and a control unit for receiving a message sent from the terminal via said switch unit and for controlling said switch unit in response to the received message. Also the control unit includes first producing means for producing a connection control instance for controlling said switch unit to setup and release a connection; second producing means for producing a call control instance having a function to initiate said first producing means, said call control instance being an instance for managing multicast calls when the received message corresponds to a message for requesting the multicast calls to be setup; and notifying means, when the received message corresponds to a message about said multicast calls, for notifying said message to the call control instance produced by said second producing means.

The call control instance performs the following operations: That is, when said call control instance is produced by said second producing means, said first producing means is initiated to thereby produce such a connection control instance for a first connection of said multicast calls and also to thereby instruct the produced connection control instance to setup the connection. When the message notified by said notifying means corresponds to a request to add a connection, said first producing means is initiated to thereby produce a connection control instance for said connection and also to thereby instruct the produced connection control instance to setup the connection. Further, when the message notified by said notifying means corresponds to a request to release a connection, said call control instance instructs a connection control instance corresponding to said release-required connection to be released.

As described above, in the first switching apparatus, the calls are individually controlled from the connections (states of leaf terminals) in an asynchronous manner. Also, the first switching apparatus is preferably arranged such that said control unit subdivides the information about said multicast calls into call information equal to information about the overall multicast calls, connection information common to all of the connections contained in said multicast calls, and a plurality of link information corresponding to each of the connections and equal to information peculiar to the connections, and holds said subdivided information therein. When the first switching apparatus is thus arranged, the condition management required to control the multicast calls can be simplified.

Also, in the first switching apparatus, it is preferred that the call control instance may be such an instance for managing the call information and the connection information, whereas the connection control instance may be such an instance for managing the link information.

Also, the call control instance may be such an instance having a function for notifying a release-request of connections to all of the connection control instances.

The call control instance may be constructed of an originating-side control instance for managing calls on the side of the root terminal, and a terminating-side control instance for managing calls on the side of the leaf terminals; and said connection control instance is constructed of an originating-side connection control instance for managing connections on the side of the root terminal, and a terminating-side connection control instance for managing connections on the side of the leaf terminals.

Also, it is preferred that the switch unit may handle a cell having a predetermined size and containing information indicative of destination therein.

A switching apparatus, according to a second aspect of the present invention (referred to as a "second switching apparatus" hereinafter), is such a switching apparatus capable of establishing multiconnection calls. The second switching apparatus is comprised of a switch unit for switching information; and a control unit for receiving a message sent from a terminal via the switch unit and for controlling the switch unit in response to the received message.

The control unit employed in the second switching apparatus is constructed of first producing means for producing a connection object instance for controlling said switch unit to setup and release a connection; second producing means for producing a call object instance having a function to initiate said first producing means, said call object instance being an instance for managing multiconnection calls when the received message corresponds to a message for requesting the multiconnection calls to be set; and notifying means, when the received message corresponds to a message about said multiconnection calls, for notifying said message to the call object instance produced by said second producing means.

The call object instance performs the following operations: When said call object instance is produced by said second producing means, said first producing means is initiated to thereby produce such a connection control instance for a first connection of said multiconnection calls and also to thereby instruct the produced connection object instance to setup the connection; when the message notified by said notifying means corresponds to a request to add a connection, said first producing means is initiated to thereby produce a connection object instance for said connection and also to thereby instruct the produced connection object instance to setup the connection; and when the message notified by said notifying means corresponds to a request to release a connection, said call object instance instructs a connection object instance corresponding to said release- required connection to be released.

As described above, the calls and the connections are separately controlled in an asynchronous manner in the second switching apparatus.

A switching apparatus, according to a third aspect of the present invention (referred to as a "third switching apparatus" hereinafter), is such a switching apparatus capable of establishing multiconnection calls. The third switching apparatus is comprised of a switch unit for switching information; and a control unit for receiving a message sent from a terminal via the switch unit and for controlling the switch unit in response to the received message.

The control unit employed in the third switching apparatus is constructed of first producing means for producing a connection object instance for controlling said switch unit to setup and release a connection; second producing means for producing a connection group object instance having a function to initiate said first producing means, said connection group object instance being an instance for classifying connections contained in multiconnection calls based on a connection group identifier to thereby manage the classified connections; third producing means for producing a call object instance having a function to initiate said second producing means, said call object instance being an instance for managing the overall multiconnection calls when a received message is a setup request message for requesting the establishment of the multiconnection calls; and notifying means, when the received message corresponds to a message about said multiconnection calls, for notifying said message to the call object instance produced by said third producing means.

The object instance performs the following operations:

When said call object instance is produced by said third producing means, said second producing means is initiated to thereby produce a connection group object instance for this connection, and also to thereby instruct the produced connection group object instance to setup the connection designated by said setup request message; when the message notified by said notifying means requests to add a connection, a judgment is made based on a connection group identifier given to this connection as to whether or not a connection group object instance for this connection is produced; when said connection group object instance for this connection is produced, this connection group object instance is instructed to setup the addition-required connection; when said connection group object instance for this connection is not produced, said second producing means is initiated to thereby produce a connection group object instance for a connection given to said connection group identifier and also to thereby instruct said produced connection group object instance to setup the addition-required connection; and when the message notified by said notifying means corresponds to a connection release request, the connection group object instance for managing the release-required connections is instructed to release the connection.

The connection group object instance performs the following operations:

When a connection establishment is instructed, said first producing means is initiated to produce a connection control instance for the instructed connection and also to instruct the produced connection control instance to set up the connection; and when releasing of a connection is instructed, a connection object instance corresponding to a connection to be released is instructed to release the connection.

Thus, the call/connection control is carried out by considering CGID in the third switching apparatus.

In the third switching apparatus of the present invention, it is possible to employ an instance additionally having such a function as the call object instance. That is, when releasing of a connection having a certain connection group identifier is instructed, said call object instance instructs a connection object instance for said connection group identifier to thereby release the connections in unit of the connection group unit. In this case, such an instance additionally having a function is employed as the connection group object instance. That is, when releasing of the connections in unit of the connection group unit is instructed from said call object instance, said connection group object instance instructs all of the connection object instances managed by said connection group object instance to thereby instruct releasing of the connections.

In either the second switching apparatus, or the third switching apparatus according to the present invention, it is possible to use an instance additionally having such a function as the connection object instance. That is, when establishing of a connection to which a connection group link identifier is applied is instructed, said connection object instance registers information for relating said object instance link identifier to identifier information of the own instance into a connection group link identifier table. In this case, such an instance additionally having a function is used as the call object instance. That is, when releasing of a connection having a certain group link identifier is instructed, said call object instance specifies connection object instances having said connection group link identifier with reference to said connection group link identification table, and also instructs each of said connection object instances to release the connection.

In either the second switching apparatus or the third switching apparatus, as the switch unit, a switch unit also having an information copy function is utilized. Furthermore, it is possible to employ as the control unit, such a control unit including fourth producing means for producing a connection control instance for establishing and releasing a connection constituting a multicast connection by controlling said switch unit; and fifth producing means for producing a multicast connection control instance having a function to initiate said fourth producing means, said multicast connection control instance being an instance for managing the multicast connection. It should be noted that in this case, as the call object instance, such an instance is employed to which the following functions are added: when the message notified by said notifying means requests to add the multicast connection, said fifth producing means is initiated to thereby produce a multicast connection control instance for said multicast connection and also to thereby instruct the produced multicast connection control instance to set the multicast connection; and when the message notified by said notifying means corresponds to a message about a multicast connection, said message is notified to the multicast connection control instance for said multicast connection. Also, as the multicast connection control instance, such an instance is employed to which the following functions are added; when said multicast connection control instance is produced by said fifth producing means, said fourth producing means is initiated to thereby produce such a connection control instance for a first connection of said multicast calls and also to thereby instruct the produced connection control instance to setup the connection; when the message notified from said object instance corresponds to a request to add a connection, said fourth producing means is initiated to thereby produce a connection control instance for said connection and also to thereby instruct the produced connection control instance to setup the connection; and when the message notified from said call object instance corresponds to a request to release a connection, said multicast connection control instance instructs a connection control instance corresponding to said release-required connection to be released.

### BRIEF DESCRIPTION OF THE DRAWINGS

A more complete understanding of the teachings of the present invention may be acquired by referring to the accompanying drawings, in which:
Fig. 1 is a schematic block diagram for representing an arrangement of a switching apparatus according to an embodiment of the present invention;
Fig. 2 is a functional block diagram of the switching apparatus according to this embodiment;
Fig. 3 is an explanatory diagram for indicating a method for managing information about calls in the control unit of the switching apparatus;
Fig. 4 illustrates one example of a SETUP message used when multicast calls are requested;
Fig. 5 is an explanatory diagram for explaining a capturing basic idea of VPCI/VCI;
Fig. 6 is an explanatory diagram for explaining a assigning basic idea of CR and EPR;
Fig. 7 is a first explanatory diagram for indicating an operation sequence of the control unit in the switching apparatus upon receipt of the SETUP message;
Fig. 8 is a second explanatory diagram for indicating an operation sequence of the control unit in the switching apparatus upon receipt of the SETUP message;
Fig. 9 is a third explanatory diagram for indicating an operation sequence of the control unit in the switching apparatus upon receipt of the SETUP message;
Fig. 10 is a sequence diagram corresponding to Fig. 7 and Fig. 8;
Fig. 11 is a sequence diagram corresponding to Fig. 9;
Fig. 12 is a first explanatory diagram for representing an operation sequence of the control unit in the switching apparatus when an ADD PARTY message is received;
Fig. 13 is a second explanatory diagram for representing an operation sequence of the control unit in the switching apparatus when an ADD PARTY message is received;
Fig. 14 is a third explanatory diagram for representing an operation sequence of the control unit in the switching apparatus when an ADD PARTY message is received;
Fig. 15 is a sequence diagram corresponding to Fig. 12 to Fig. 14;
Fig. 16 is an explanatory diagram for showing an operation sequence of the control unit in the switching apparatus during a simultaneous releasing process;
Fig. 17 is a functional block diagram for indicating the arrangement of the switching apparatus in which the call originating software unit is separated from the call terminating software unit;
Fig. 18 illustrates one example of the SETUP message employed when multicast calls are requested;
Fig. 19 is a functional block diagram when the multiconnection calls are established by the switching apparatus according to the embodiment;
Fig. 20 is an explanatory diagram for indicating a summary of call information data managed by the call object instance;
Fig. 21 is an explanatory diagram for indicating a summary of connection group information data managed by the connection group object instance;
Fig. 22 is an explanatory diagram for indicating a summary of connection information data managed by the connection object instance;
Fig. 23 is an explanatory diagram for showing a summary of a method table within the call object instance;
Fig. 24 is an explanatory diagram for showing a summary of a method table within the connection group object instance;
Fig. 25 is an explanatory diagram for showing a summary of a method table within the connection object instance;
Fig. 26 is an explanatory diagram for showing a summary of a pointer table within the call object instance 41;
Fig. 27 is an explanatory diagram for showing a summary of a pointer table within the connection group object instance;
Fig. 28 is an explanatory diagram for indicating a summary of a CGLID management table;
Fig. 29 is a sequence diagram for showing an operation sequence of the control unit in the switching apparatus upon receipt of a SETUP message for multiconnection;
Fig. 30 is a sequence diagram for showing an operation sequence of the control unit in the switching apparatus upon receipt of a CONN message;
Fig. 31 is a sequence diagram for showing an operation sequence of the control unit in the switching apparatus upon receipt of an ADD CONN message;
Fig. 32 is a sequence diagram for showing an operation sequence of the control unit in the switching apparatus upon receipt of a CONN ADDED message;
Fig. 33 is a sequence diagram for showing an operation sequence of the control unit in the switching apparatus upon receipt of a REL CONN message;
Fig. 34 is an explanatory diagram for indicating a summary of a RELEASE message;
Fig. 35 is a sequence diagram for denoting an operation sequence of the control unit in the switching apparatus when a simultaneous release of connections is instructed;
Fig. 36 is a sequence diagram for explaining an operation sequence of the connection object instance when a message containing CGLID is received;
Fig. 37 is a sequence diagram for explaining a connection releasing sequence in CGLID unit; and
Fig. 38 is a schematic block diagram for showing the conventional ATM switching apparatus.

### DESCRIPTION OF THE PREFERRED EMBODIMENTS

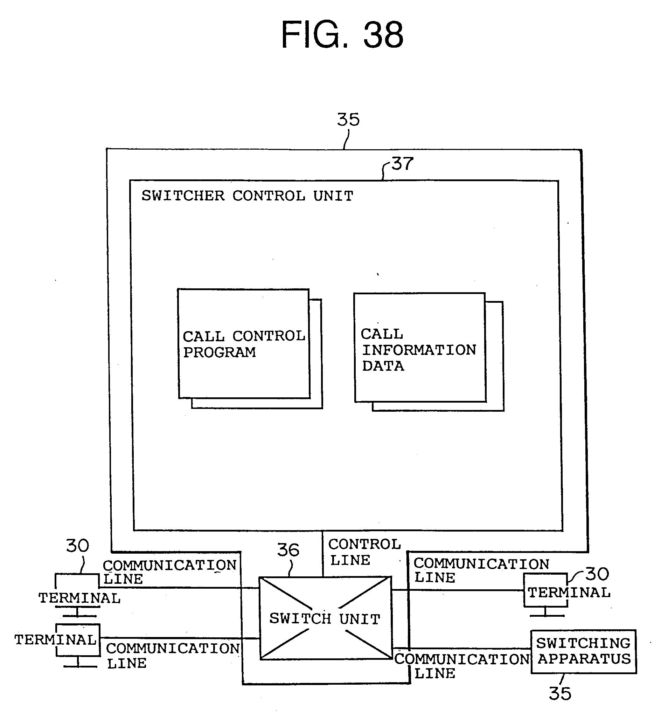

Fig. 38 schematically represents an arrangement of one conventional switching apparatus (unit). As shown in this drawing, the conventional switching apparatus 35 is equipped with a switch unit 36 and a control unit 37 for the switching apparatus 35 (will be referred to as a "switcher control unit" hereinafter). The switch unit 36 is connected via a communication line to either a plurality of terminals 30 or another switching apparatus 35. The switch unit 36 owns a function for sending information derived from a certain communication line to another communication line. The switcher control unit 37 receives a signaling message derived via the switch unit 36 from a terminal 30 and the like, and controls the switch unit 36 in response to the received signal. In this case, one call control program is initiated every time a single call is issued in the conventional switcher control unit 37. Also, this call control program manages all of data required to manage the calls as the call information data.

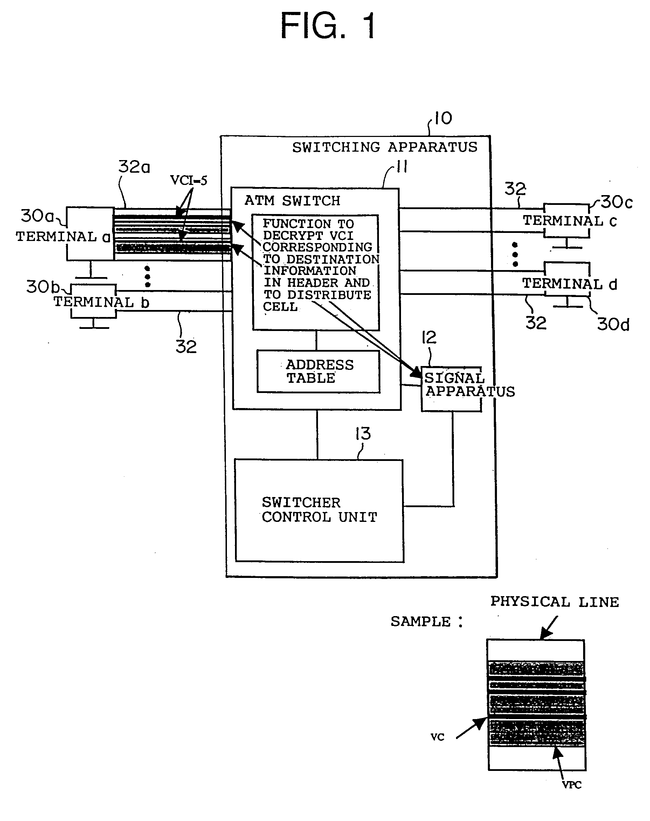

Fig. 1 schematically represents an arrangement of a switching apparatus (unit) according to an embodiment mode of the present invention, and an operation mode thereof. It should be understood that this switching apparatus operated in this mode corresponds to a so- called "ATM (Asynchronous Transfer Mode) switching apparatus".

As shown in this drawing, a switching apparatus 10 is constructed of an ATM switch 11, a signaling apparatus 12, and a switcher control unit 13. The ATM switch 11 is connected via a physical line 32 to either a plurality of terminals or another ATM switching apparatus (in Fig. 1, to terminals 30a to 30d).

Similar to the normal system, in a communication system with employment of this switching apparatus 10, a plurality of VPCs (Virtual Path Connections) and a plurality of VCs (Virtual Channels) are set in each of the physical lines 32, and further an ATM cell is transmitted/received between the terminals. This ATM cell owns a header containing VPCI corresponding to a VPC identifier and VCI corresponding to a VC identifier.

The ATM switch 11 substitutes VPCI of an ATM cell by VCI of the ATM cell in response to a content set in an address table, and transfers the ATM cell to VPCI and VCI in the designated physical line. When an ATM cell whose VCI is equal to 5 (namely, ATM cell holding signaling information) is received, the ATM switch 11 transfers this ATM cell to the signaling apparatus 12. Furthermore, the ATM switch 11 owns a copy function of an ATM cell. This copy function is used when multicast is carried out.

The signaling apparatus 12 transfers to the switcher control unit 13, such a signal produced by processing the ATM cell transferred from the ATM switch 11 to obtain a de-cell. The signaling apparatus 12 forms an ATM cell based upon a signal sent from the switcher control unit 13, and further executes such a process operation for supplying the formed ATM cell via the ATM switch 11 to the line.

The switcher control unit 13 corresponds to a control circuit constructed of a CPU, a memory and the like. The switcher control unit 13 analyzes a signal (information corresponding to signaling ATM cell, namely control message) entered from the signaling apparatus 12, and then controls the ATM switch 11 or the signaling apparatus 12 in accordance with the analysis result.

Now, a concrete explanation will be made of operations of the switcher control unit 13. For the sake of convenience, a portion defined by the signaling apparatus 12 and the switcher control unit 13 shown in Fig. 1 will now be expressed as a switcher control unit 13 in the following descriptions.

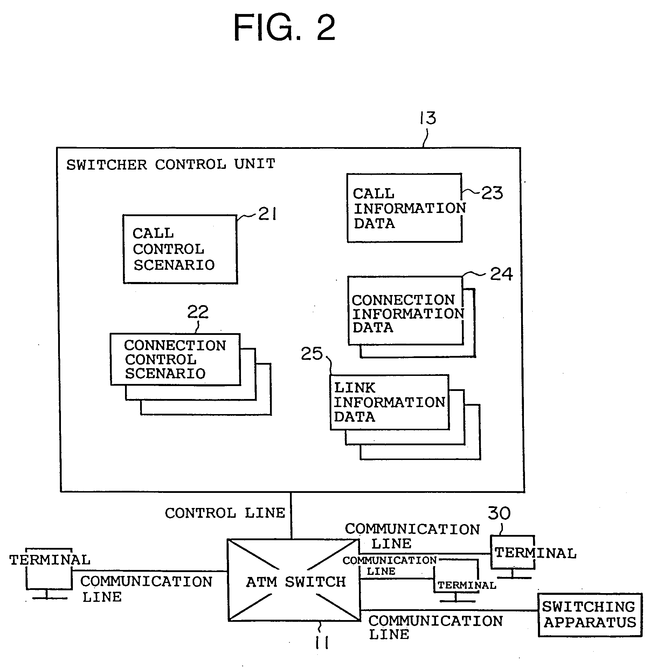

First, the operations of the switcher control unit 13 (involving signaling apparatus) will now be summarized with reference to Fig. 2. As shown in Fig. 2, various sorts of scenarios corresponding to samples of programs are prepared within the switcher control unit 13. A call control scenario 21 is such a scenario for producing a call control scenario instance corresponding to an instance for managing overall calls. A connection call scenario 22 is such a scenario for producing a connection control scenario instance corresponding to an instance for controlling a connection, for instance, establishing and releasing of a connection. As the connection control scenario 22, various sorts of scenarios used for a multicast and a multiconnection are prepared.

The respective scenarios are used in accordance with the below-mentioned sequences.

In the case that a request to setup either a multicast call or a multiconnection call is notified from a certain terminal 30, one call control scenario instance is first produced from the call control scenario 21 within the switcher control unit 13. The produced call control scenario instance produces a connection control scenario instance from the connection control scenario 22 corresponding to a connection to be established.

In this case, only such information required to setup a first connection is contained in a call setting message used to setup either the multicast call or the multiconnection call. Accordingly, information related to other connections is given to the ATM switching apparatus by another message for additionally requesting the connection.

When a connection adding request related to the calls managed by own instance is received by the call control scenario instance, a connection control scenario instance for this connection is newly produced.

In connection with such a process operation, the call control scenario instance will manage the respective connection control scenario instances produced by own instance. When, for instance, a message for requiring releasing of a certain connection is given, this call control scenario instance notifies this message to a connection control scenario instance corresponding to this connection.

Each of the connection control scenario instances produced by the call control scenario instance controls the ATM switch 11 to setup a connection. When releasing of the connection is instructed, the connection control scenario instance releases the connection under management, and accomplishes the own instance.

In other words, when establishing of either the multicast call or the multiconnection call is requested, the connection control scenario instance is produced with respect to each of the connections contained in the call (containing path of branch portion during multicast operation), and then a single call control is carried out by these connection control scenario instance and call control scenario instance within the switcher control unit 13.

It should be noted that in order to manage either a multicast call or a multiconnection call, various sorts of information about this call should be saved. As schematically indicated in Fig. 2, these various sorts of information are classified into three sorts of data such as call information data 23, connection information data 24, and link information data 25, and are saved therein.

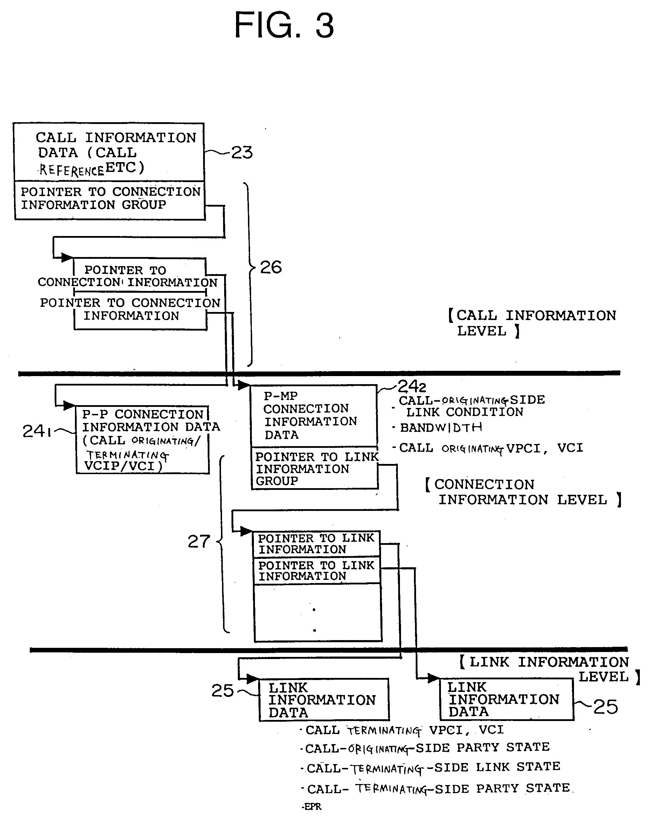

Referring now to Fig. 3, a description will be made of a relationship between each data and the information saved as the call information data 23, the connection information data 24, and the link information data 25. It should be understood that Fig. 3 represents data produced in the switcher control unit 13 when a multiconnection call constructed of a P-P (point-to-point) connection and a P-MP (point-to-multipoint) connection (multicast connection) is established.

As indicated in Fig. 3, the call information data 23 holds only information specific to its call (of call information level) such as the call reference. The switcher control unit 13 also stores data 26 for establishing a relationship between the call information data 23 and the connection information data 24.

The connection information data 24 is mainly classified into data for a P-P connection and data for a P-MP connection. The connection information data 24₁ for the P-P connection holds information related to the connections such as call originating/terminating VPCI/VCI, a bandwidth, and a condition. In contrast with this connection information data 24₁ for the P-P connection, connection information data 24₂ for the P-MP connection holds only such information (about root terminal side) commonly used to the respective leaf terminals; such as call originating VPCI/VCI, a bandwidth, and a call-originating-side link condition. Call terminating VPCI/VCI and a call-terminating-side link condition, which correspond to the information about the connection on the leaf terminal side, is held into link information data 25 related to the connection information data 24₂ by data 27.

In other words, since the information related to the connection on the root terminal side need not to be held every leaf terminal in the P-MP connection (since the ATM cell supplied from the root terminal is copied with the switch unit 11 to be supplied to a plurality of leaf terminals), the information related to the P-MP connection is classified as described above, and then the classified information is saved in the switcher control unit 13.

Subsequently, the operations of the switcher control unit 13 will be explained more in detail. First, a sequential operation for establishing multicast calls will now be described.

At Q.2971, when multicast (P-MP) calls are established, a connection setup operation between a root terminal and a first leaf terminal is carried out by a SETUP message, and leaf terminals are added one by one in response to an ADD PARTY message.

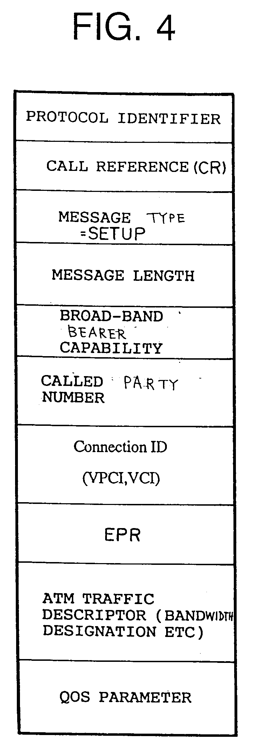

As illustrated in Fig. 4, the SETUP message requested to setup the M-PM connection call contains a protocol identifier, a call reference, a message sort, a message length, a broad-band bearer capability, a called party number, a Connection ID, endpoint reference (EPR), an ATM traffic descriptor, a QOS parameter, and the like.

The protocol identifier corresponds to an information element for indicating that a message corresponds to a message made by which protocol. For instance, information indicative of a Q.2971 message is set. The call reference (CR: call reference) is an information element used to identify calls which are duplexed in unit of VCI=5. The message sort is such an information element for indicating a sort of message. Apparently, information for representing that a message is equal to the SETUP message is set to the message sort in the SETUP message. The message length corresponds to an information element indicative of a length of a message portion except for the protocol identifier, the call reference, the message type, and the message length.

The broad-band bearer capability corresponds to an information element for designating the bearer capability specific to B-ISDN, which contains information for indicating that a call is an M-PM connection call. The called party number corresponds to a telephone number of a called party (first leaf terminal). The connection ID is an information element for designating information transfer VPCI/VCI between a call originating terminal (root terminal) and an ATM switch. EPR (End Point Reference) corresponds to an identifier for a leaf used when a leaf terminal (namely, information receiving terminal) is added or is dropped. The ATM traffic descriptor corresponds to data for designating a required bandwidth and the like. The QOS (Quality Of Service) parameter is such a parameter for designating qualities (delays, cell loss ratio etc.) of a line to be assigned.

It should be understood that at Q.2731, the following cases are allowed. That is, in a former case that the Connection ID is assigned by a terminal (namely, terminal sets Connection ID to SETUP message). In a latter case that the Connection ID is assigned by the switching apparatus. In the latter case, no Connection ID is contained in the SETUP message, and VPCI/VPI (Connection ID) assigned by the ATM switching apparatus is notified to the terminal by way of a CONNECT message and the like.

As to CR and EPR, they may be assigned by either the terminal or the switching apparatus.

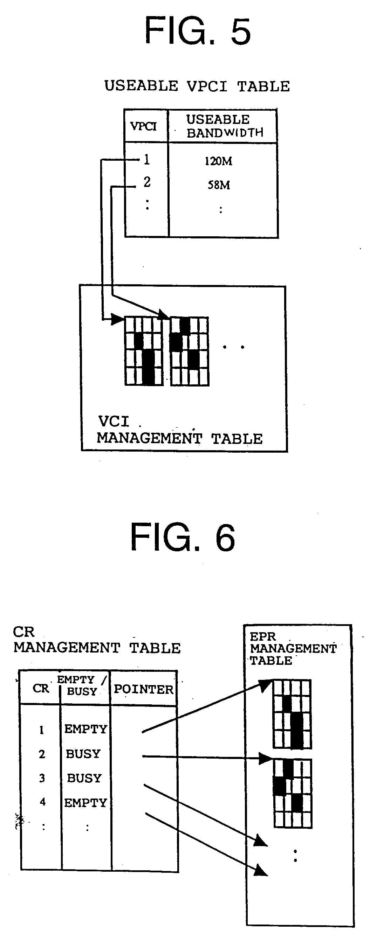

Now, a sequential operation for assigning VPCI and VCI, CR and EPR will now be described with reference to Fig. 5 and Fig. 6.

As indicated in Fig. 5, to assign VPCI-VCI, a VPCI table and a plurality of VCI management tables (bit map) are employed. The VPCI table contains a relationship between assignable VPCI and a useable remaining bandwidth (useable bandwidth). The VCI management table is prepared for each of VPCIs. In each of the VCI management tables, an empty/busy condition (namely, unused, or under use) of the corresponding VCI is stored.

When VPCI and VCI are assigned, proper VPCI is selected from the VPCI table, considering the required bandwidth. Then, the empty of VCI is retrieved from the VCI management table corresponding to the selected VPCI, so that VCI is determined.

Also, as shown in Fig. 6, when CR and EPR are assigned, a CR management table and an EPR management table are employed. The CR management table holds the using conditions (empty/busy) of the respective CRS, and a pointer to the EPR management table (bit map) for representing empty/busy conditions of EPR under control of CR. When CR is assigned, such a CR whose empty/busy state is "empty" is assigned from the CR management table, and then the empty/busy condition of this CR is set to "busy". When EPR is captured, the EPR management table is specified within the CR management table based on the pointer corresponding to CR. Then, the empty EPR is acquired and this empty EPR is set to "busy".

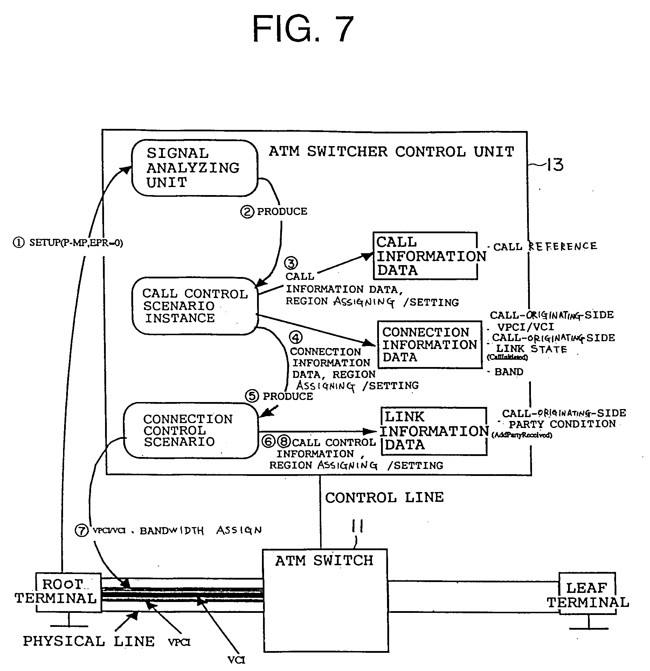

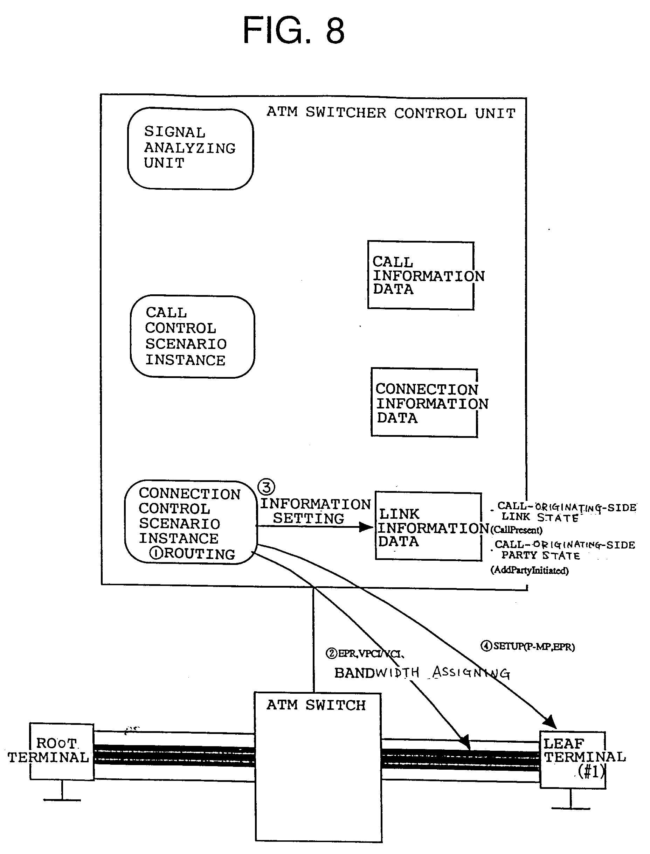

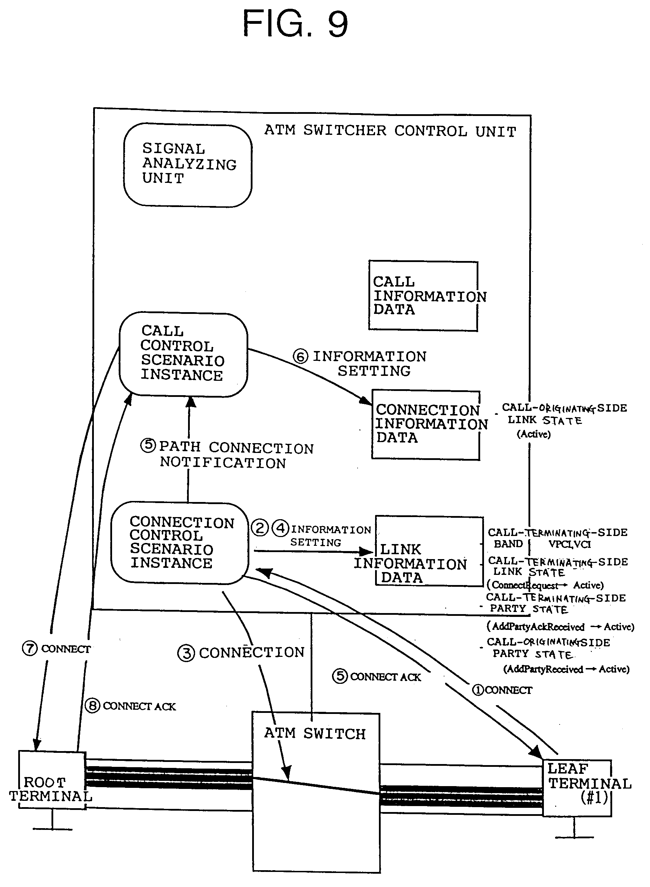

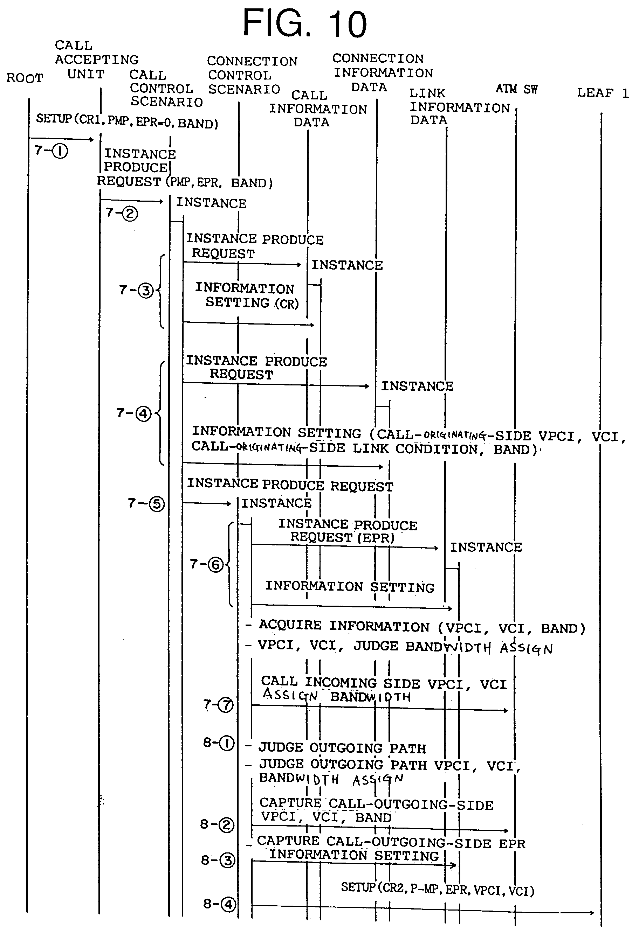

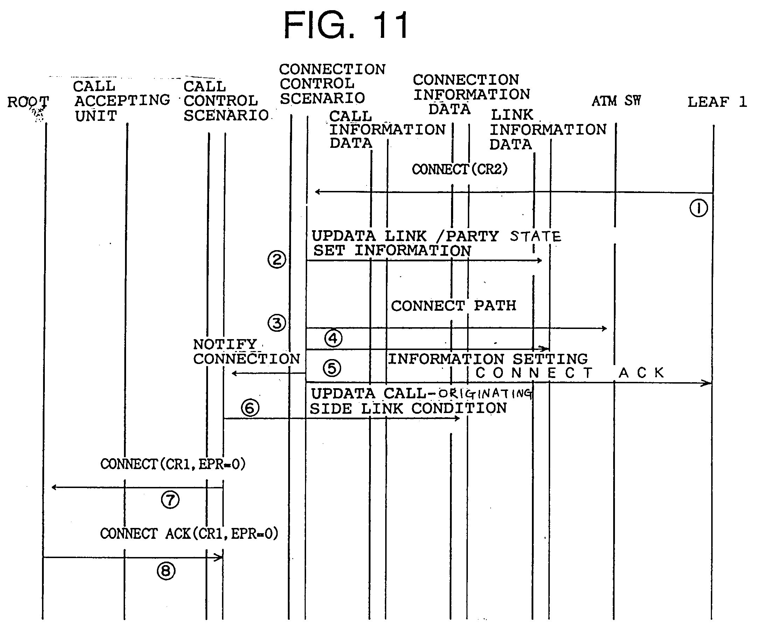

Referring now to Fig. 7 to Fig. 11, a description will be made of process operations executed in the switcher control unit 13 after a SETUP message has been outputted by a root terminal until a line is connected between this root terminal and a first leaf terminal (will be expressed as a "first leaf setting process operation" hereinafter). Among these drawings, Fig. 7 to Fig. 9 are explanatory diagrams for schematically indicating an operation sequence of the switcher control unit 13 executed in the leaf setting process operation. Further, Fig. 10 and Fig. 11 are sequence diagrams for describing more in detail the operation sequence executed in the first leaf setting process operation. It should be noted that Fig. 10 represents a relationship between the process operation of Fig. 7 and the process operation of Fig. 8 by employing reference numerals such as 7-(1) and 8-(1), whereas Fig. 11 shows a relationship between the process operation of Fig. 7 and the process operation of Fig. 9 by employing the same reference numerals as those used in Fig. 9.

It is now assumed that such a SETUP message containing CR and EPR(=0) but not containing Connection ID has been inputted to the switching apparatus 10 in the sequential operations shown in the drawings.

First, process operations executed in the switcher control unit 13 after a root terminal has sent a SETUP message until VC (Virtual Channel) between the root terminal and the ATM switching apparatus is assigned will now be explained with reference to Fig. 7 and Fig. 10.

As indicated in Fig. 7, the SETUP message sent from the root terminal is inputted into a signal analyzing unit employed in the switcher control unit 13 (1). The signal analyzing unit which has detected the input of the SETUP message produces a call control scenario instance corresponding to an instance of a call control scenario (2). At this time, the signal analyzing unit transfers the SETUP message to the call control scenario.

Then, the produced call control scenario instance secures a region for storing call information data, and holds information such as CR commonly used to the call and contained in the SETUP message as an element of the call information data (3). Subsequently, the call control scenario instance secures a region for storing connection information data, and assignes VPCI/VCI used to set a line (path) of a bandwidth designated in the SETUP message. Then, this call control scenario instance holds the assigned VPCI/VCT as an element of the connection information data. Also, the call control scenario instance sets a call-originating-side link state "Call Initiated" as the element of the connections information data (4). Then, the call control scenario instance produces a connection control scenario instance (5). In this case, the call control scenario instance notifies various information such as the called telephone number, EPR, and the band contained in the SETUP message to the connection control scenario.

The connection control scenario instance secures a region for storing link information data and sets a call-originating-side party condition "Add Party Received" as one element of the link information data (6). Then, the connection control scenario instance assignes a line of a required bandwidth on a physical line between a root terminal and the ATM switch 11 (7).

It should be noted that as shown in Fig. 10, securing of the region for storing the call information data and the like is actually performed by producing instances for managing the respective data (7-3, 4, 6).

Next, referring to Fig. 8, a description will now be made of a process operation executed after VC between the root terminal and the ATM switching apparatus has been assigned. As illustrated in this drawing, after the VC between the root terminal and the switching apparatus has been assigned, the connection control scenario instance executes a routing operation (i.e., to specify exit path) based upon the call-terminating-side telephone number (1). Next, the connection control scenario instance assignes VPCI/VCI and a bandwidth with respect to the specified exit path (2). Also, the connection control scenario instance sets "Call Present" and "Add Party Initiated" into the link information data, as a call-terminating-side link condition and a call-terminating-side party condition (3). Then, the connection control scenario instance returns the SETUP message to the leaf terminal (4).

As shown in Fig. 9 and Fig. 11, a leaf terminal which has received the SETUP message transmits a CONNECT message (1). In response to this CONNECT message, the connection control scenario instance changes both the call-terminating-side link condition and the call-terminating-side party condition, corresponding to the elements of the link information data into "Connect Request" and "Add Party ACK Received" (2), and controls the ATM switch in such a manner that the call-originating-side path where VPCI/VCI and the bandwidth have been assigned is connected to the call terminating-side path (3). When the path connections are completed, the connection control scenario instance changes the call-terminating- side link condition, the call-terminating-side party state, and the call-originating-side party state, corresponding to the elements of the link information data, into "Active" (4). Furthermore, the connection control scenario instance notifies a CONNECT ACK message to the leaf terminal, and also such a message that the path is connected to the call control scenario instance (5).

The call control scenario instance to which the message about the path connection has been notified changes the call-originating-side link condition corresponding to the element of the connection information data into "Active" (6), and transmits a CONNECT message to the root terminal (7).

The process operation from the root terminal to the SETUP message is accomplished when the call control scenario instance receives the CONNECT ACK message (8) from the root terminal. It should be understood that although being omitted in the drawing, the CONNECT ACK message is inputted via the signal analyzing unit to the call control scenario instance.

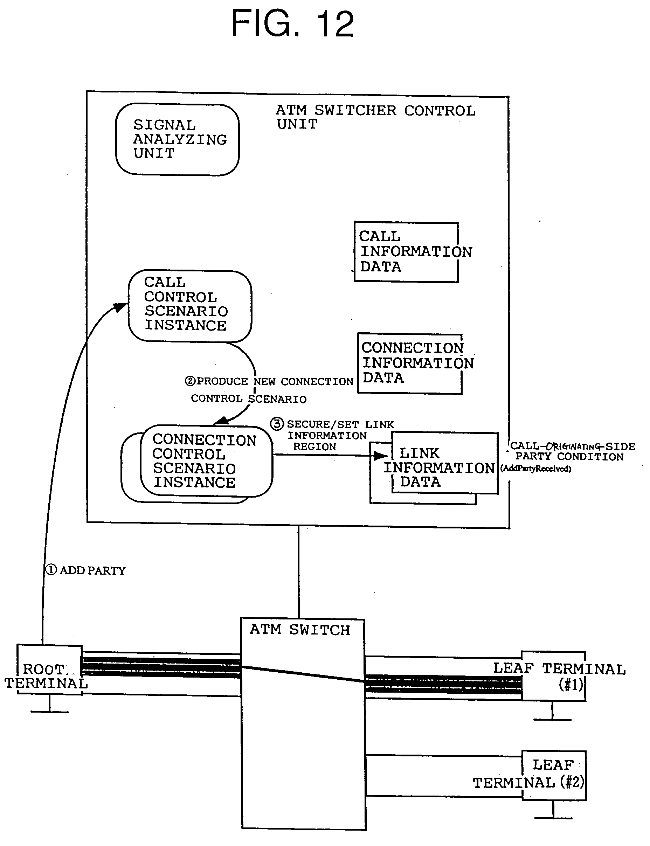

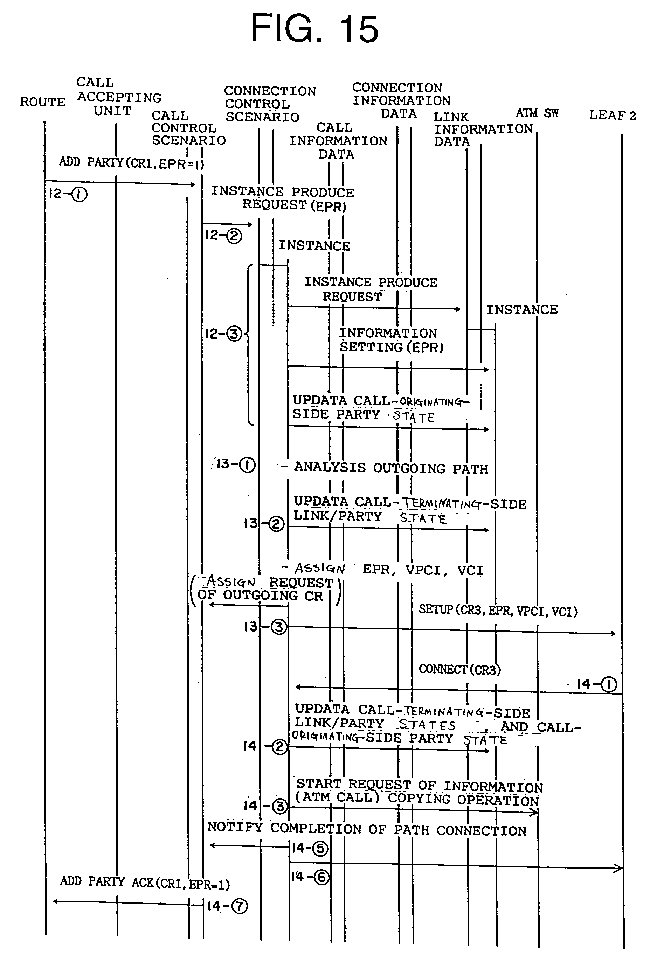

Subsequently, a leaf adding process operation will now be explained with reference to Fig. 12 to Fig. 15. As previously described, an addition of a leaf is carried out when a root terminal transmits an ADD PARTY message.

As indicated in Fig. 12, the ADD PARTY message is inputted to the call control scenario instance (1). Upon receipt of this ADD PARTY message, the call control scenario instance produces a new connection control scenario instance (will be referred to as a "second connection control scenario instance") (2). The ADD PARTY message contains EPR and a called party number, corresponding to an identifier of a leaf terminal, and the call control scenario instance transfers the above- described information to the produced second connection control scenario instance. The bandwidth when the first leaf is connected, which is held as one element of the connection information data, is notified to the second connection control scenario instance (not shown).

The second connection control scenario instance secures a region for storing the second link information data related to a connection controlled by the own second connection control scenario instance, and also sets EPR and the call-terminating-side party condition "Add Party Received" to the second link information data (3).

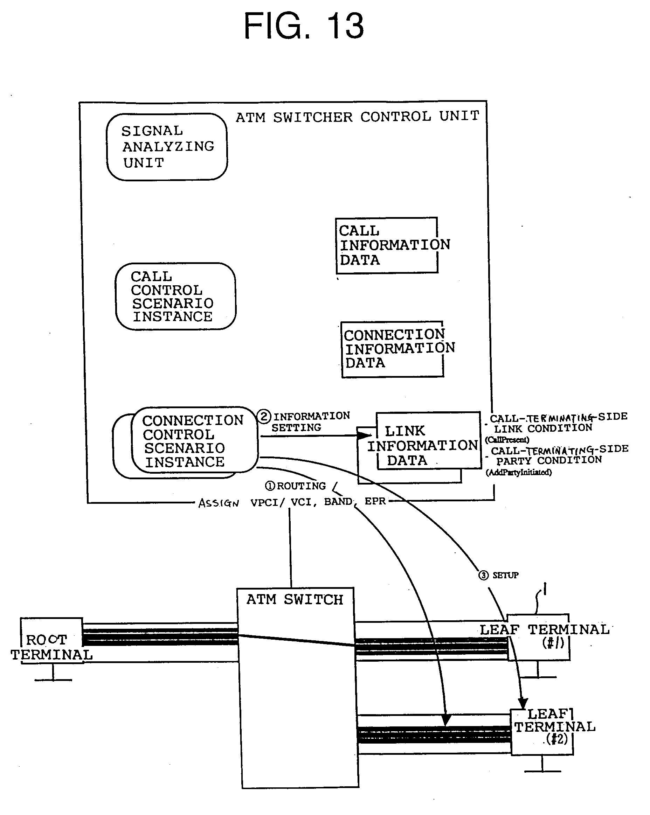

As indicated in Fig. 13, the second connection control scenario instance performs a routing operation based on the data received from the call control scenario instance to thereby assign physical line/VPCI, VCI, bandwidth, and EPR to a target leaf terminal (1). Next, VPCI/VCI, a call-terminating-side link condition "Call Present", a call-terminating-side party state "Add Party Initiated" are set to the second link information data (2). Then, the SETUP message is transmitted to a leaf terminal #2 (3).

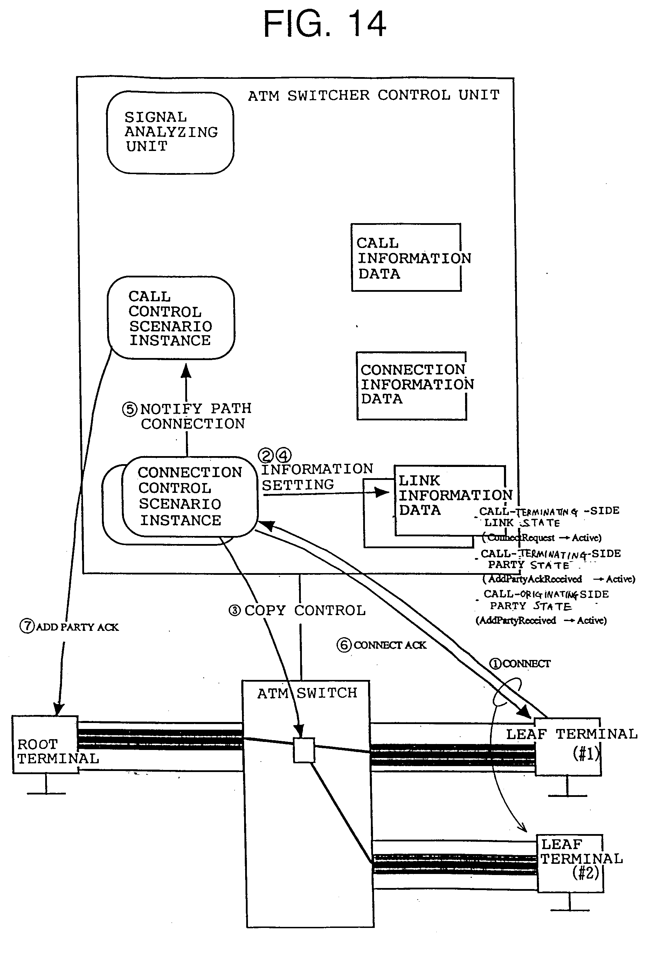

As illustrated in Fig. 14, the leaf terminal #2 transmits a CONNECT message when the SETUP message is received, and this CONNECT message is inputted to the second connection control scenario instance (1).

The second connection control scenario instance changes the call-terminating-side link state contained within the second link information data into "Connect Request", and the call-terminating-side party state into "Add Party ACK Received" (2). Next, the second connection control scenario instance controls a cell copying function provided in the ATM switch in such a manner that the ATM call-derived from the root terminal is transferred to the leaf terminals #1 and #2 (3).

The second connection control scenario instance changes the call-originating-side party state contained within the second link information data into "Active" (4), notifies such a message that "a path is connected", to the call control scenario instance (5), and sends CONNECT ACK to the leaf terminal #2 (6). Then, the call control scenario instance which has received the path connection message sends an ADD PARTY ACK message to the root terminal #1 (7).

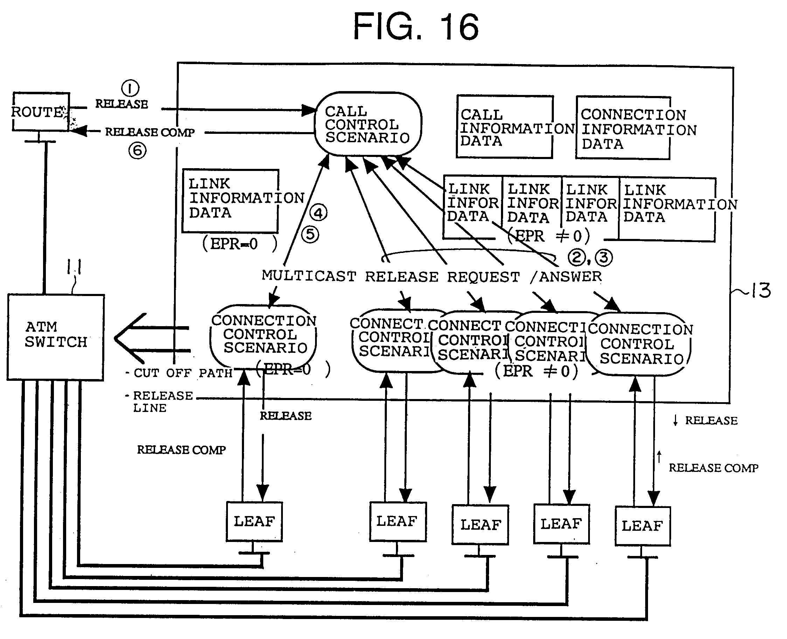

Next, a simultaneous releasing process operation of a leaf terminal will now to be explained with reference to Fig. 16. The simultaneous releasing process operation of the leaf terminal is executed when a RELEASE message for instructing "simultaneous releasing" is inputted from the root terminal.

Upon receipt of the RELEASE message from the root terminal (1), the call control scenario instance multicasts a leaf releasing request to the connection control scenario instances corresponding to the respective leaf terminals except for EPR=0 (added leaf terminals) (2).

Each of these connection control scenario instances which have received the leaf releasing request is operated as follows:
(1) The RELEASE message is transmitted to the leaf terminal.
(2) The interrupt of the cell copying operation related to the line managed by the own scenario instance is requested to the cell copy function provided in the ATM switch 11.
(3) The line on the call terminating side, and VPI/VCI are released.
(4) When RELEASE COMPLETE is received from the leaf terminal, the link information data managed by the own scenario instance is released.
(5) A completion of deleting the leaf is notified to the call control scenario instance (3).
(6) The own instance is ended.

When the leaf deleting completions are notified from all of the connection control scenario instances whose EPR≠0, the call control scenario instance issues the release request to the connection control scenario instance corresponding to EPR=0 (namely, corresponding to leaf terminal where connection is first set) (4).

The connection control scenario instance corresponding to EPR=0 transmits the RELEASE message to the leaf terminal. Then, this connection control scenario instance changes both the call-terminating-side link state and the call- terminating-side party state managed by the own scenario instance into "Release Indication" and "Drop Party Initiated", respectively. Subsequently, the connection control scenario instance releases the line on the call receiving side, and VPCI/VCI, and then releases the link information data when RELEASE COMPLETE is received from the leaf terminal. Then, the connection control scenario instance notifies the completion of deleting the leaf to the call control scenario instance (5), and then accomplishes the own instance.

The call control scenario instance which have received the notification about the leaf deleting completion (5) issued from the connection control scenario instance corresponding to EPR=0 transmits a RELEASE COMPLETE message to the root terminal (6), and release the call information data and the connection information data, so that the own scenario instance is ended.

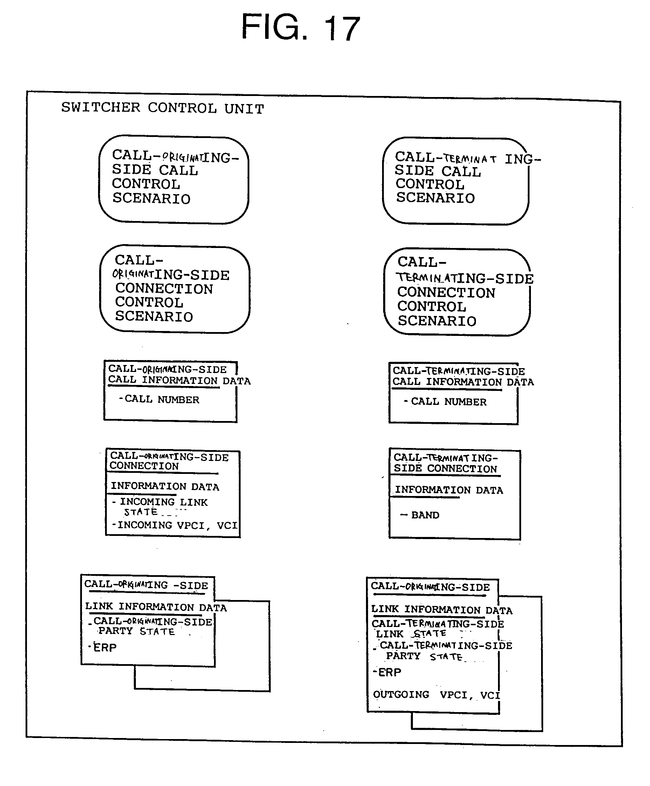

As previously described, in the switching apparatus 10 according to the embodiment mode, the instance for performing the controls on the call originating side and the call terminating side is employed. Alternatively, as schematically indicated in Fig. 17, the instance for performing the control on the call originating side may be separated from the instance for performing the control on the call terminating side.

A setup sequence of multiconnection calls by the switching apparatus 10 will now be described.

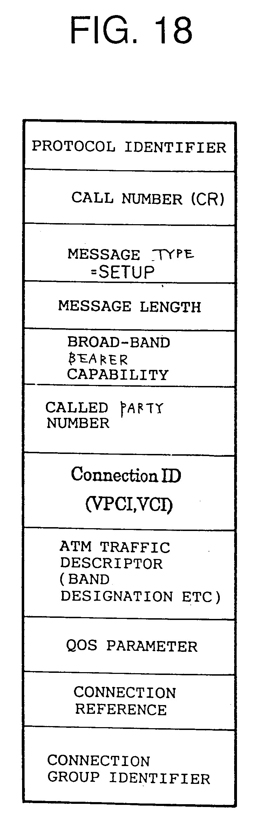

In Fig. 18, a SETUP message used when the multiconnection is established is briefly indicated. A connection reference is an information element corresponding to EPR in the SETUP message for P-MP. A connection group identifier (CGID) is an information element for grouping a plurality of connections within a single call which is defined in Q.2722.2. A connection group link identifier (CGLID) is an information element used to setup a connection, considering a route of the connection.

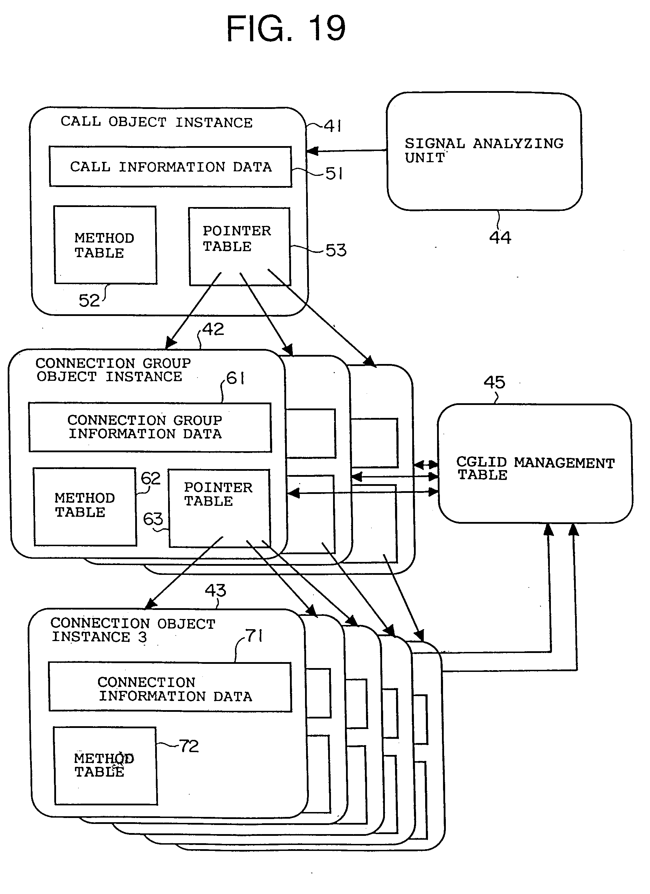

Fig. 19 is a functional block diagram of the switcher control unit 13 under such a condition, i.e., after the multiconnection call has been established, and before this multiconnection call is released. It should be understood that although Fig. 19 employs different titles from those of Fig. 2 so as to avoid confusion, a call object instance corresponds to the call control scenario instance and a connection object instance corresponds to the connection control scenario instance. Operations of the respective portions will now be summarized.

As represented in the drawing, after the multiconnection call has been established and before this call is released, there are a call object instance 41, several connection group object instances 42, several connection object instances 43, a signal analyzing unit 44, and a CGLID table 45 in the switcher control unit 13.

The signal analyzing unit 44 analyzes a message received from either the switching apparatus at the prestage or the terminal to thereby determine a process operation to be executed. For instance, when the SETUP message is received, the signal analyzing unit 44 produces the call object instance 41 for managing the requested calls.

The call object instance 41 owns call information data 51, a method table 52, and a pointer table 53, and produces the connection group object instance 42. The connection group object instance 42 owns connection group information data 61, a method table 62, and a pointer table 63, and produces the connection object instance 43. The connection object instance 42 owns connection group information data 71 and a method table 72, and establishes/releases the connection.

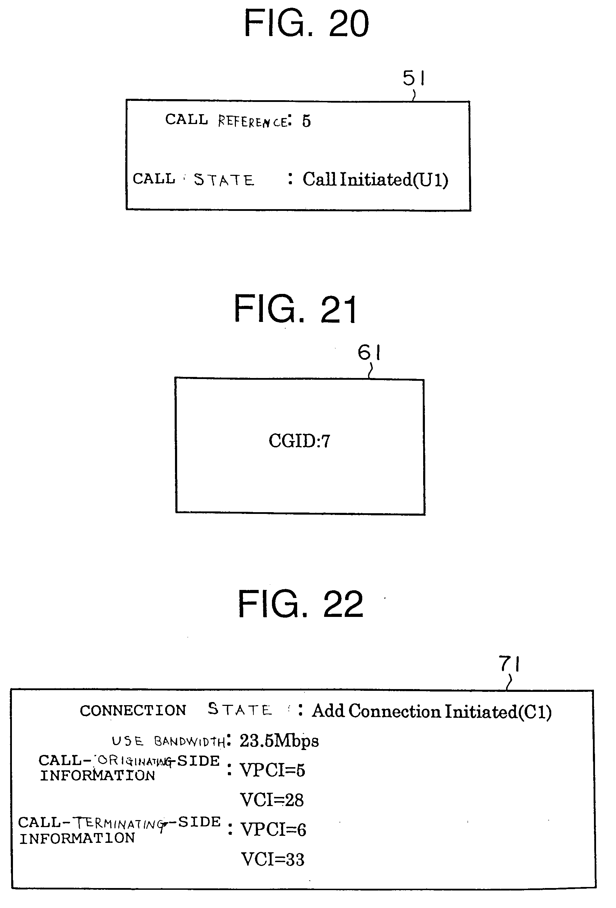

Fig. 20, Fig. 21, and Fig. 22 show one example of data stored in the call information data 51, the connection group information data 61, and the connection information data 71, respectively. As indicated in Fig. 20, information about the call level such as the call reference is held in the call information data 51. As shown in Fig. 21, CGID (connection group ID) is held in the connection group information data 61. As shown in Fig. 22, a connection state, a used bandwidth, and call-originating/terminating-side VPCI/VCI are held in the connection information data 71.

The method table corresponds to an interface for an object instance having this method table. When a certain process operation is executed in a certain object instance, any of the methods contained in this method table held by this object instance is initiated.

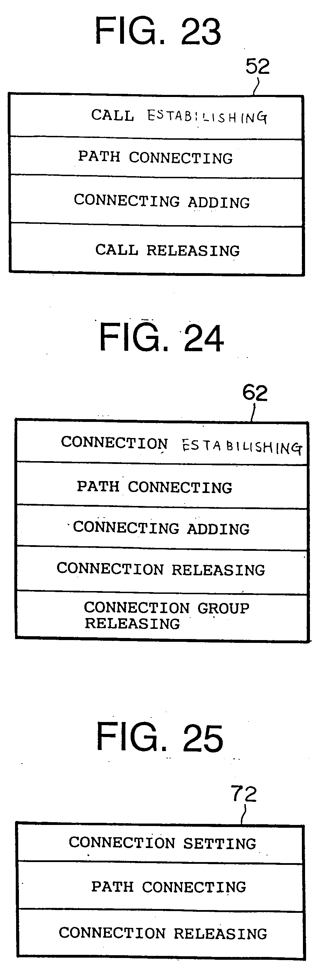

Fig. 23, Fig. 24 and Fig. 25 briefly represent contents of the method tables 52, 62, and 72, respectively. As indicated in Fig. 23, such methods as "call establishing", "path connection", "connection addition", and "call releasing" are prepared in the method table 52 employed within the call object instance 41. As represented in Fig. 24, such methods as "connection establishing", "path connection , "connection releasing", "connection addition", "connection group releasing" are prepared in the method table 52 employed in the connection group object instance 42. As represented in Fig. 25, such methods as "connection establishing", "path connection", "connection releasing", are prepared in the method table 72 employed in the connection object instance 43.

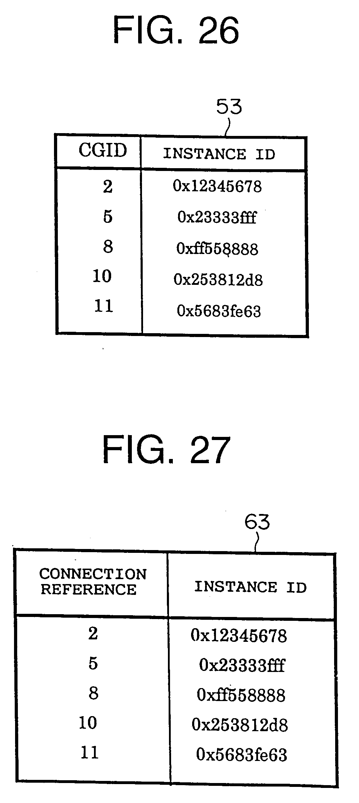

As shown in Fig. 26, a relationship between CGID, and an instance "id" of the connection group object instance 42 is held in a pointer table 53 contained in the call object instance 41. As indicated in Fig. 27, a relationship between the connection reference and the instance "id" of the connection object instance 42 is held in a pointer table 63 contained in the connection group object instance 42.

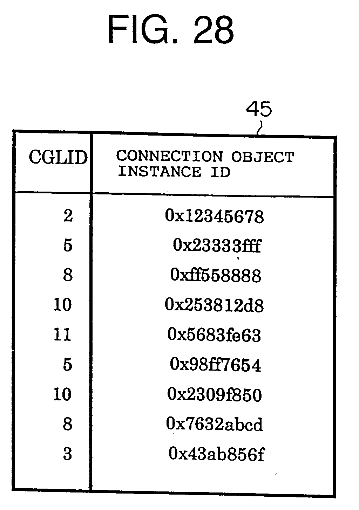

A CGLID management table 45 holds a relationship between CGLID (connection group link identifier) and an instance "id" of the connection object instance 43, as indicated in Fig. 28.

Operations of the respective portions will be explained more in detail.

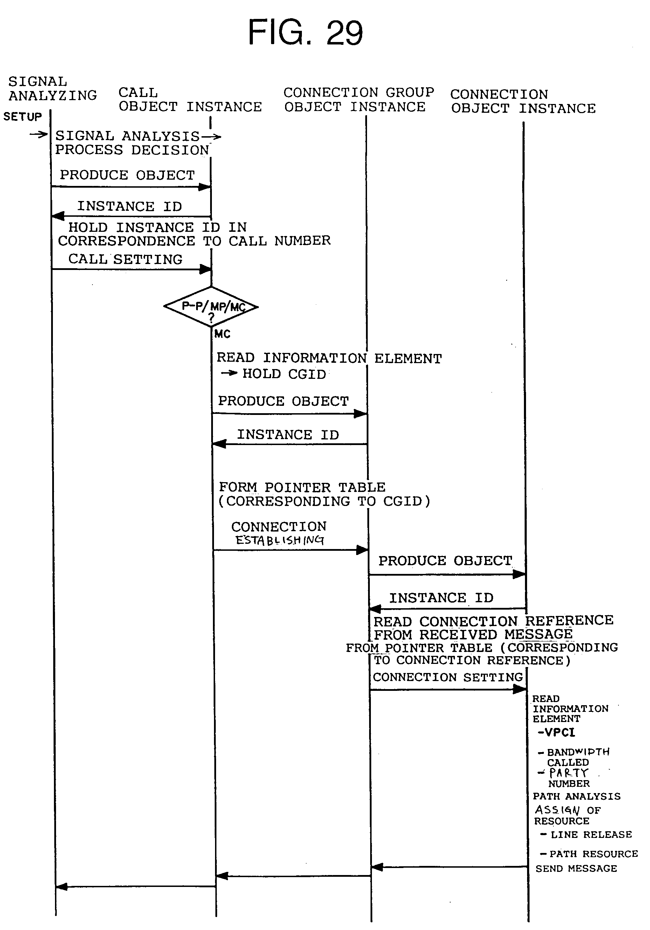

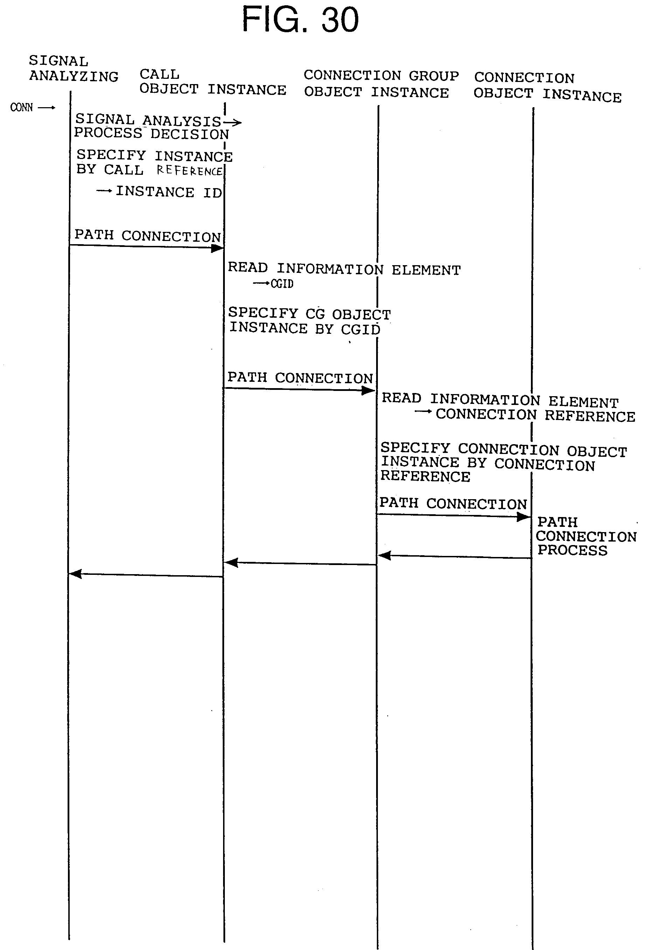

A first description will now be made of process operations performed by the respective portions after the SETUP message for the multiconnection (MC) has been inputted until a first connection is set with reference to Fig. 29 and Fig. 30.

As illustrated in Fig. 29, when the SETUP message for MC is inputted the signal analyzing unit produces a call object instance for this call, and accepts the instance "id" of the call object instance as a return value. Then, the signal analyzing unit holds this instance "id" in connection with the call reference contained in the message.

It should be noted that thereafter, the signal analyzing unit specifies a call object instance (instance "id") corresponding to the received message based upon the relationship between the held instance "id" and the call reference, and allocates this message to the specified call object instance.

After the instance "id" is stored, the signal analyzing unit initiates the "call setting" method of the produced call object instance.

Based upon the information element contained in the SETUP message, the call object instance judges the condition of the call. When the call object instance judges that the call corresponds to the multiconnection, the following operations are carried out.

The call object instance reads out the connection group id (CGID) from the SETUP message. Then, the call object instance produces the connection group object instance for the read CGID. A pointer table holding the instance "id" obtained as the return value in correspondence with CGID is formed. Next, the call object instance initiates the "connection establishing" method of the produced connection group object instance.

The connection group object instance in which the "connection establishing" method is initiated produces the connection object instance to thereby obtain the instance "id" of the connection object instance as the return value. Then, a pointer table is formed in order to store this instance "id" in connection with the connection reference contained in the SETUP message, and these data are registered into this pointer table. Next, the connection group object instance initiates the "connection establishing" method of the connection object instance.

The connection object instance in which the "connection establishing" method is initiated reads out such information specific to the connections such as VPCI/VCI, the required bandwidth, and QOS, and then holds these information as connection information data. Based upon the connection information and the routing analysis result, the connection object instance reserves/sets the bandwidth, VPCI/VCI, and the resource, and then transmits the SETUP message to the call terminating terminal corresponding to the connection destination.

As a result, the call terminating terminal sends out a CONN message.

As represented in Fig. 30, when the CONN message is received, the signal analyzing unit specifies the instance "id" corresponding to the call reference contained in this CONN message and initiates the "path connection" method of the call object instance containing the specified instance "id".

The call object instance specifies such an instance "id" corresponding to CGID contained in the received message by using the pointer table managed by the own instance. Then, this call object instance initiates the "path connection" method of the connection group object instance containing the specified instance "id".

The connection object instance in which the "path connection" method is initiated specifies such an instance "id" corresponding to the connection reference contained in the CONN message by using the pointer table managed by the own instance. Then, the "path connection" method of the connection object instance having the specific instance "id" is initiated.

The connection object instance in which the "path connection" is initiated connects the path (namely, control switch unit).

Also, the connection object instance sends out a CONNECT ACK message to the call terminating terminal, whereas the call object instance sends out a CONNECT message to the call originating terminal, and this call object instance is notified by the connection object instance via the connection group object instance such a message that connecting of the connection is complete. Then, when the CONNECT ACK message is inputted from the call originating terminal, the establishing process operation of the first connection is accomplished.

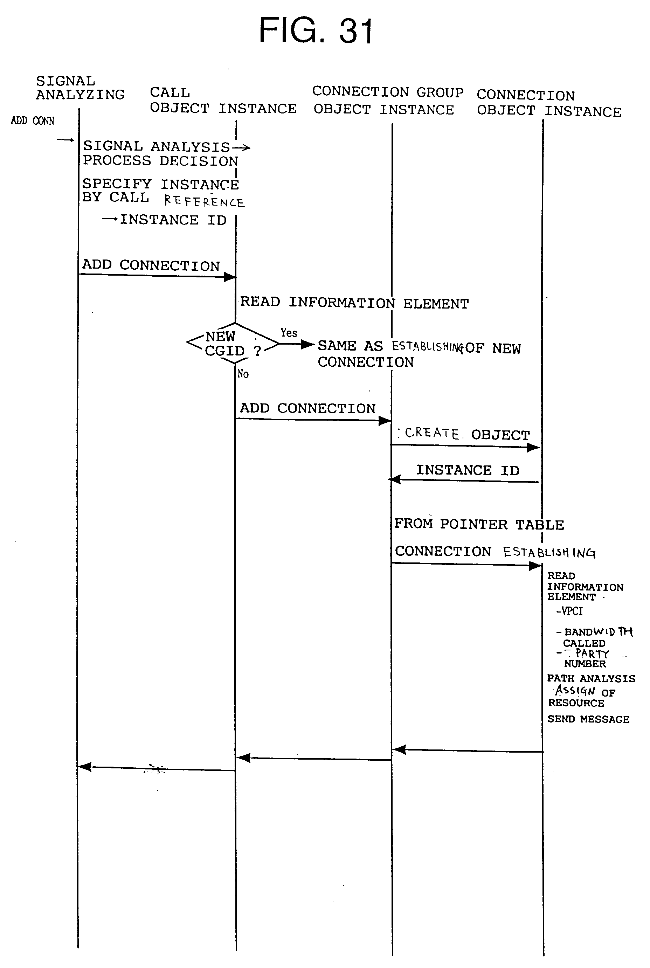

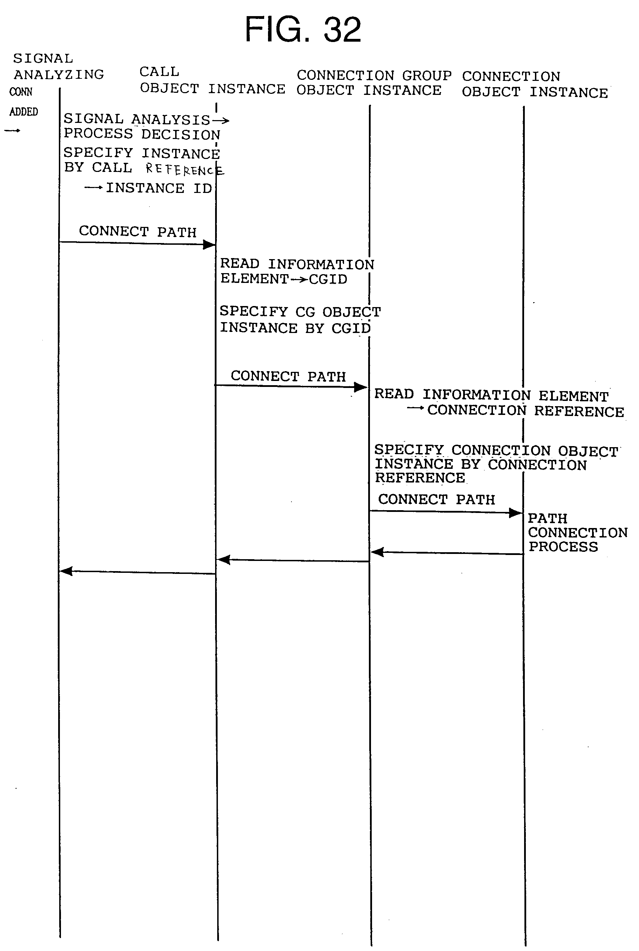

Next, operations with respect to a request for adding a connection will now be explained by using Fig. 31 and Fig. 32.

As indicated in Fig. 31, when an ADD CONN message corresponding to a message for instructing an addition of a connection is received, the signal analyzing unit specifies an instance "id" based upon a call reference contained in the ADD CONN message. Then, a "connection addition" method of the call object instance corresponding to the specific instance "id" is initiated.

The call object instance in which the "connection addition" method is initiated judges as to whether or not CGID contained in the received message is already present by employing the pointer table. Then, in such a case that CGID is new, a process operation similar to the process operation for newly establishing the connection is carried out, which has been explained with reference to Fig. 29. In other words, the call object instance produces a connection group object instance for this CGID, and initiates a "connection establishing" method of this connection group object instance.

On the other hand, when CGID is already present, the call object instance does not produce the connection group object instance, but initiates a "connection addition" method of the existing connection group object instance corresponding to this CGID. Similar to such a "connection establishing" case, the connection group object instance in which the "connection addition" method is initiated produces the connection object instance, and further registers the connection reference and "id" of the produced connection object instance into the previously formed pointer table. Then, a "connection establishing" method of the produced connection object instance is initiated. Then, the reserving/setting operations of the bandwidth, VPCI/VCI, and path resource related to the connection identified based upon the connection reference are carried out by the connection object instance in which the "connection establishing" method is initiated. Then, an ADD CONN message is sent out to the additional call terminating terminal.

As a result, the call terminating terminal sends a CONN ADDED message which will be then entered into the switcher control unit. Then, as represented in Fig. 32, a process operation is carried out based on this message within the switcher control unit in a similar manner when the CONN message is received.

A process operation for releasing multiconnection calls will now be explained.

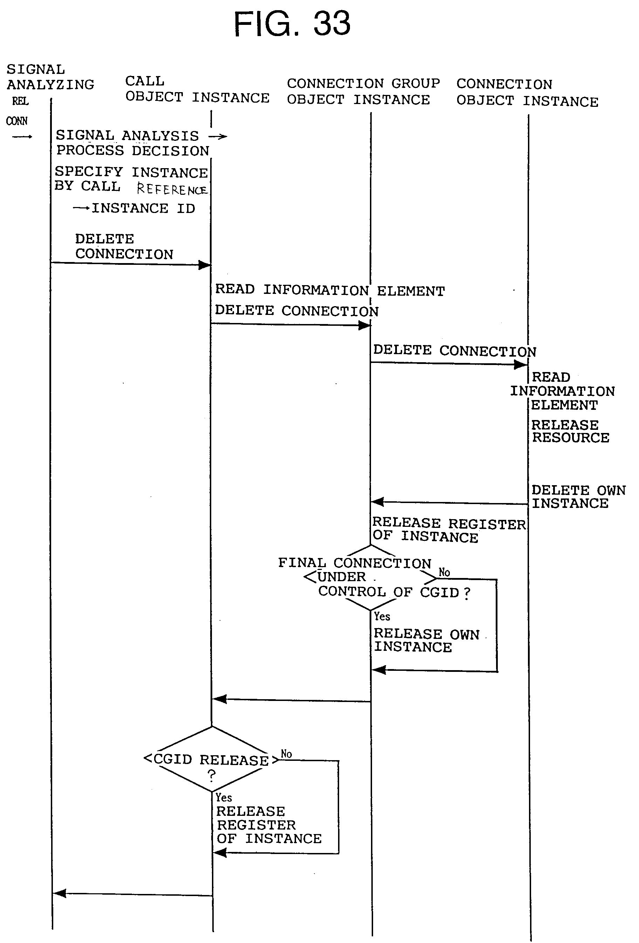

First, referring to Fig. 33, a process operation when a REL CONN message instructed to individually release connections is received will now be described.

The signal analyzing unit which has received the REL CONN message recognizes that this message corresponds to the REL CONN message based on the information element within the message, and then initiates the "connection releasing" method of the call object instance having the instance "id" corresponding to the call reference contained in this message.

The call object instance in which the "connection releasing" method is initiated specifies the instance "id" corresponding to CGID contained in the REL CONN message, and initiates the "connection releasing" method of the connection group object instance corresponding to the specified instance "id".

The connection group object instance in which the "connection releasing" method is initiated specifies the instance "id" corresponding to the connection reference contained in the received message by referring to the pointer table managed by the own object instance. That is to say, the connection group object instance specifies the connection object instance for controlling the connections which are required to be released, and initiates the "connection releasing" method of the specified connection object instance.

The connection object instance in which the "connection releasing" method is initiated releases the resource (namely, release connection) and further notifies such a message that releasing of the connection is complete to the connection group object instance. Then, the connection object instance releases (deletes) the own instance.

The connection group object instance to which the completion message about releasing of the connection is notified deletes the data concerning the connection object instance which has made such notification from the pointer table, so that registering of this connection object instance is released. Subsequently, the connection group object instance judges as to whether or not the data concerning the connection object instance is left in the pointer table. Then, when there is no data left in the pointer table, since the final connection managed under CGID has been released, the connection group object instance releases the own instance. Also, this connection group object instance notifies such a message that the process operation is accomplished to the call object instance.

In the case that the instance releasing message is notified from the connection group object instance, the call object instance deletes the data related to this connection group object instance from the pointer table. It should be understood that although omitted in the drawing, the call object instance notifies to the signal analyzing unit, such a message that there is no data about the connection group object instance within the pointer table, and then releases the own instance.

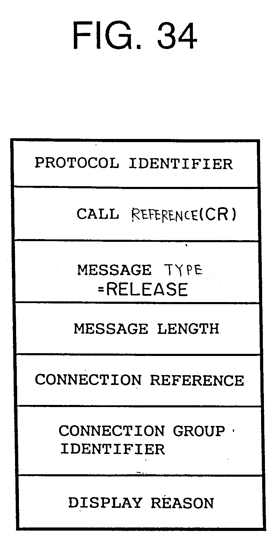

A description will now be made of a sequential operation for simultaneously releasing multiconnection calls. The simultaneous releasing of the multiconnection calls is commenced by receiving a RELEASE message as shown in Fig. 34.

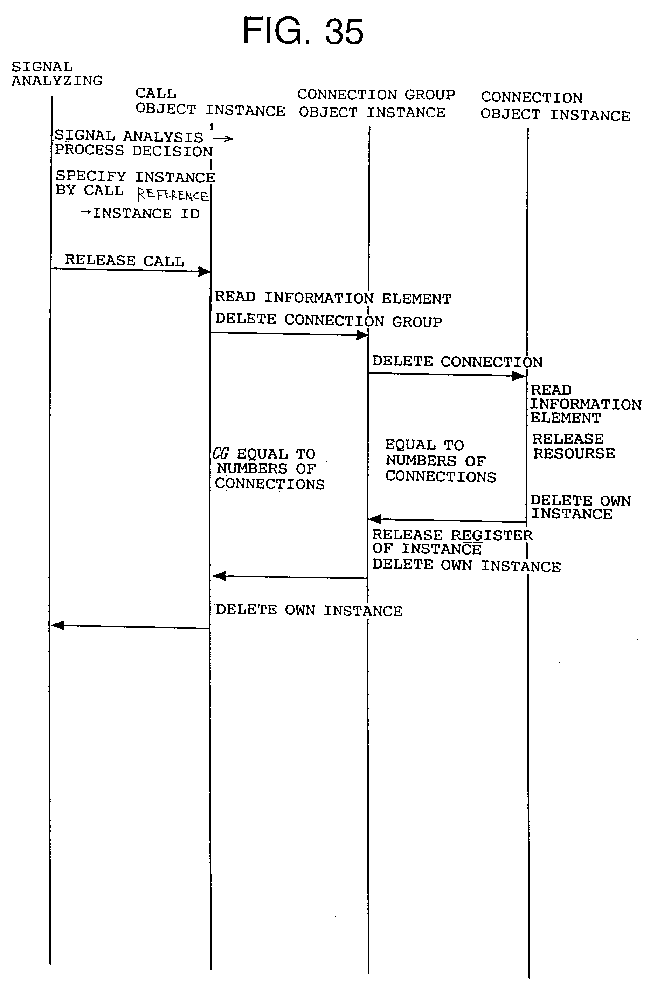

As indicated in Fig. 35, upon receipt of such a message that the simultaneous releasing of the multiconnection calls is instructed, the signal analyzing unit initiates a "call releasing" method of the call object instance corresponding to this message (call refernce).

The call object instance in which the "call releasing" method is initiated initiates a "connection group releasing" method of all connection group object instances whose instances "id" are stored in the pointer table.

The connection group object instance in which the "connection group releasing" method is initiated initiates a "connection releasing" method of all connection object instances whose instances "id" are stored in the pointer table.

Then, each of the connection group object instances updates the content of the pointer table every time such a message that releasing of the connection is completed is notified from the connection object instance managed by the own object instance, so that while grasping the releasing condition of the connection, this connection group object instance notifies such a message that all of the connections are released to the call object instance when all of these connections and released, and then deletes the own instance.

Similarly, when such a message that the process operation is complete is notified from all of the connection group object instances the call object instance deletes the own instance.

It should be also noted that when CGLID is contained in the received message, the connection object instance executes a process operation for registering CGLID and the own instance "id" into the CGLID management table.

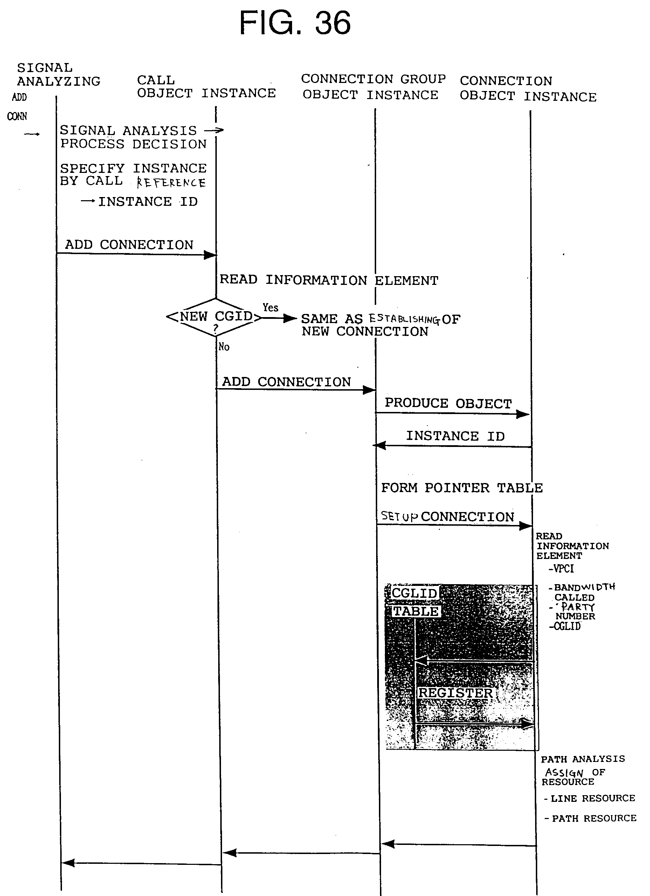

For instance, in the case that CGLID is contained in the ADD CONN message, as shown in Fig. 36, the connection object instance registers CGLID and the own instance "id" into the CGLID table when the "connection establishing" method is initiated by the connection group object instance. Also the connection object instance assignes VPCI/VCI, taking account of CGLID.

The switching apparatus 10 is also arranged in such a way that the connections can be deleted in unit of CGLID.

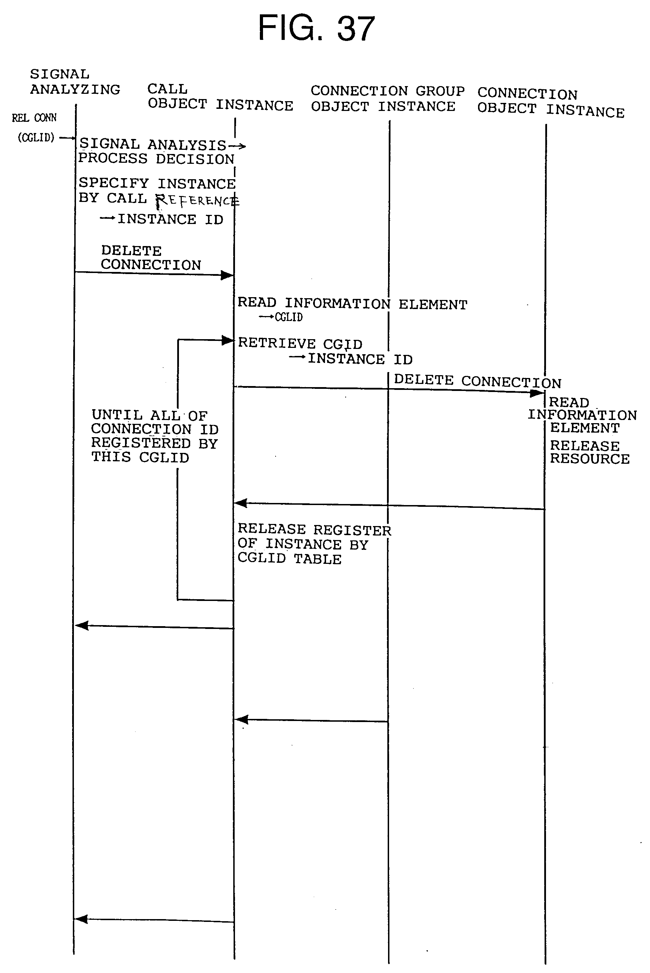

As illustrated in Fig. 37, the signal analyzing unit which has received a REL CONN message for deleting the connections in unit of CGLID initiates a "connection deleting" method of the corresponding call object instance. The call object instance in which the "connection deleting" method is initiated reads out the content of the received message so as to recognize deleting of the connections in unit of CGLID. Then, the call object instance repeatedly executes the following operations until the data about the subject CGLID disappears from the CGLID management table. That is, the instance "id" corresponding to such CGLID whose deletion is instructed is retrieved from the CGLID management table; the connection deleting "method of the connection object instance is initiated which is identified by the retrieved instance "id"; and the data related to the connection object instance which notifies that deleting of the connection is accomplished is deleted from the CGLID management table.

## Claims

1. A switching apparatus for establishing multicast calls among a root terminal corresponding to an information sending source terminal, and a plurality of leaf terminals corresponding to information receiving terminals, comprising:
switch means for performing an information switching function and an information copying function; and
control means for receiving a message derived from the terminal via said switch means and for controlling said switch means in response to the received message; wherein:
said control means includes:
first producing means for producing a connection control instance for controlling said means unit to setup and release a connection;
second producing means for producing a call control instance having a function to initiate said first producing means, said call control instance being an instance for managing multicast calls when the received message corresponds to a message for requesting the multicast calls to be set; and
notifying means, when the received message corresponds to a message about said multicast calls, for notifying said message to the call control instance produced by said second producing means;
said call control instance performs the following operations:
when said call control instance is produced by said second producing means, said first producing means is initiated to thereby produce such a connection control instance for a first connection of said multicast calls and also to thereby instruct the produced connection control instance to setup the connection;
when the message notified by said notifying means corresponds to a request to add a connection, said first producing means is initiated to thereby produce a connection control instance for said connection and also to thereby instruct the produced connection control instance to setup the connection; and
when the message notified by said notifying means corresponds to a request to release a connection, said call control instance instructs a connection control instance corresponding to said release-required connection to be released.

2. A switching apparatus as claimed in claim 1 wherein:
said control means subdivides the information about said multicast calls into call information equal to information about the overall multicast calls, connection information equal to all of the connections contained in said multicast calls, and a plurality of link information corresponding to each of the connections and equal to information specific to the connections, and holds said subdivided information.

3. A switching apparatus as claimed in claim 2 wherein:
said call control instance manages said call information and said connection information, whereas said connection call instance manages said link information.

4. A switching apparatus as claimed in claim 1 wherein:
said call control instance owns a function for notifying a release-request of connections to all of the connection control instances.

5. A switching apparatus as claimed in claim 1 wherein:
said call control instance is constructed of an originating-side control instance for managing calls on the side of the root terminal, and a terminating-side control instance for managing calls on the side of the leaf terminals; and
said connection control instance is constructed of an originating-side connection control instance for managing connections on the side of the root terminal, and a terminating-side connection control instance for managing connections on the side of the leaf terminals.

6. A switching apparatus as claimed in claim 1 wherein:
said switch means handles a cell having a predetermined size and containing information indicative of destination therein.

7. A switching apparatus comprising switch means for switching information; and control means for receiving a message sent from a terminal via said switch means and for controlling the switch means in response to the received message; wherein:
said control means includes:
first producing means for producing a connection object instance for controlling said switch means to setup and release a connection;
second producing means for producing a call object instance having a function to initiate said first producing means, said call object instance being an instance for managing multiconnection calls when the received message corresponds to a message for requesting the multiconnection calls to be established; and
notifying means, when the received message corresponds to a message about said multiconnection calls, for notifying said message to the call object instance produced by said second producing means;
said call object instance performs the following operations:
when said call object control instance is produced by said second producing means, said first producing means is initiated to thereby produce such a connection control instance for a first connection of said multiconnection calls and also to thereby instruct the produced connection object instance to setup the connection;
when the message notified by said notifying means corresponds to a request to add a connection, said first producing means is initiated to thereby produce a connection object instance for said connection and also to thereby instruct the produced connection object instance to setup the connection; and
when the message notified by said notifying means corresponds to a request to release a connection, said call object instance instructs a connection object instance corresponding to said release-required connection to be released.

8. A switching apparatus comprising switch means for switching information; and control means for receiving a message sent from a terminal via the switch means and for controlling the switch means in response to the received message; wherein:
aid control means includes:
first producing means for producing a connection object instance for controlling said switch means to set and release a connection;
second producing means for producing a connection group object instance having a function to initiate said first producing means, said connection group object instance being an instance for classifying connections contained in multiconnection calls based on a connection group identifier to thereby manage the classified connections;
third producing means for producing a call object instance having a function to initiate said second producing means, said call object instance being an instance for managing the overall multiconnection calls when a received message is a setting request message for requesting establishing of the multiconnection calls; and
notifying means, when the received message corresponds to a message about said multiconnection calls, for notifying said message to the call control instance produced by said third producing means;
said object instance performs the following operations:
when said call object instance is produced by said third producing means, said second producing means is initiated to thereby produce a connection group object instance for this connection, and also to thereby instruct establishing of the connection designated by said setting request message;
when the message notified by said notifying means requests to add a connection, a judgment is made based on a connection group identifier given to this connection as to whether or not a connection group object instance for this connection is produced; when said connection group object instance for this connection is produced, this connection group object instance is instructed to setup the addition-required connection; when said connection group object instance for this connection is not produced, said second producing means is initiated to thereby produce a connection group object instance for a connection given to said connection group identifier and also to thereby instruct said produced connection group object instance to setup the addition-required connection; and
when the message notified by said notifying means corresponds to a connection release request, the connection group object instance for managing the release-required connections is instruct to release the connection;
said connection group object instance performs the following operations:
when setting of a connection is instructed, said first producing means is initiated to produce a connection control instance for the instructed connection and also to instruct the produced connection control instance to setup the connection; and
when releasing of a connection is instructed, a connection object instance corresponding to a connection to be released is instructed to release the connection.

9. A switching apparatus as claimed in claim 8 wherein:
when releasing of a connection having a certain connection group identifier is instructed, said call object instance instructs a connection object instance for said connection group identifier to thereby release the connections in unit of the connection group unit; and
when releasing of the connections in unit of the connection group unit is instructed from said call object instance, said connection group object instance instructs all of the connection object instances managed by said connection group object instance to thereby instruct releasing of the connections.

10. A switching apparatus as claimed in claim 7 wherein:
when establishing of a connection to which a connection group link identifier is applied is instructed, said connection object instance registers information for relating said object instance link identifier to identifier information of the own instance into a connection group link identifier table; and
when releasing of a connection having a certain group link identifier is instructed, said call object instance specifies connection object instances having said connection group link identifier with reference to said connection group link identification table, and also instructs each of said connection object instances to release the connection.

11. A switching apparatus as claimed in claim 7 wherein:
said switch means further contains a copy function of information;
said control means further includes:
fourth producing means for producing a connection control instance for establishing and releasing a connection constituting a multicast connection by controlling said switch unit; and
fifth producing means for producing a multicast connection control instance having a function to initiate said fourth producing means, said multicast connection control instance being an instance for managing the multicast connection;
said call object instance performs the following operations:
when the message notified by said notifying means requests to add the multicast connection, said fifth producing means is initiated to thereby produce a multicast connection control instance for said multicast connection and also to thereby instruct the produced multicast connection control instance to setup the multicast connection:
when the message notified by said notifying means corresponds to a message about a multicast connection, said message is notified to the multicast connection control instance for said multicast connection:
said multicast connection control instance performs the following operations:
when said multicast connection control instance is produced by said fifth producing means, said fourth producing means is initiated to thereby produce such a connection control instance for a first connection of said multicast calls and also to thereby instruct the produced connection control instance to setup the connection;
when the message notified from said object instance corresponds to a request to add a connection, said fourth producing means is initiated to thereby produce a connection control instance for said connection and also to thereby instruct the produced connection control instance to setup the connection; and
when the message notified from said call object instance corresponds to a request to release a connection, said multicast connection control instance instructs a connection control instance corresponding to said release-required connection to be released.

12. A switching apparatus for establishing multicast calls among a root terminal corresponding to an information sending source terminal, and a plurality of leaf terminals corresponding to information receiving terminals, comprising:
switch means for switching information; and
control means for controlling said switch means;
said control means including a call control means for controlling a call; and connection control means for controlling the connections related to the respective leaf terminals provided independently from said control means in an asynchronous manner.

13. A switching apparatus as claimed in claim 12 wherein:
all information data corresponding to information data about the call;
connection information data commonly used to the respective leaves with respect to the connection; and
link information data about the link of the switch unit with respect to each of the leaves are recorded, into said call control unit.

14. A switching apparatus as claimed in claim 12 wherein:
said call control unit processes said call information data and said connection information data; and said connection control unit processes said link information data.

15. A switching apparatus as claimed in claim 12 wherein:
aid connection control unit produces an instance in unit of leaf terminals to thereby manage the link information data with respect to each of said leaf terminals.

16. A switching apparatus as claimed in claim 12 wherein:
said call control means is separated from said connection control unit with respect to the originating side and the terminating side.

17. A method for controlling a call having a multicast function, comprising the steps of:
receiving a message from a root terminal to execute a call process; and
establishing a connection every leaf by an instance produced in said call process with respect to each of the leaf terminals.

18. A switching apparatus having a multiconnection establishing function for establishing a plurality of connections within a single call, comprising:
call control means produced in said switching apparatus when a call occurs, for producing connection group control means when establishing or releasing of one or more than two connections is required within said call, said connection group control means controlling a plurality of connections containing said one or more than two connections, and also for instructing this connection group control means to setup and release this connection, and further which disappears when said call disappears;
connection group control means produced from said call control means, when setting of one or more than two connections is instructed, for producing connection control means corresponding to each of said one or more than two connections instructed by said establishing operation, and for instructing said connection control means to setup the connection;
when releasing of one or more than two set connections is instructed from said call control means, for instructing said connection control means corresponding to said one or more than two release- instructed connections to thereby release said connection; and also which disappears when all of said produced connection control means disappears; and
connection control means produced from said connection group control means, for setting the connection instructed from said connection group control means;
when releasing of the established connection is instructed from said connection group control means, which disappears itself after said connection is deleted.

19. A switching apparatus as claimed in claim 18 wherein:
under such a condition that one or more than two connections have been set, when said call control means instructs that one or more than two connections are additionally set, said connection group control means produces a connection control means in correspondence with each of the newly established connections.

20. A switching apparatus as claimed in claim 18 wherein:
under such a condition that one or more than two connections have been set, when said call control means instructs to release any connection from one ore more than two set connections, said connection group control means releases the connection with respect to the produced connection control means corresponding to said release-instructed connection.

21. A multiconnection call control method for establishing a plurality of connections within a single call, comprising:
a step for producing a call control means when a call is produced in a switching apparatus;
a step for producing a connection group control means in response to an instruction issued from said call control means, said connection group control means controlling one or more than two connections contained in said call;
a step for producing a connection control means for establishing the connection instructed by said connection group control means;
a step in which when releasing of said one or more than two connections contained in said call is requested, said call control means instructs said connection group control means to release the connection;
a step for instructing a connection control means corresponding to said one or more than two connections to release said one or more than two connections to which releasing is instructed by said connection group control means;
a step for causing said connection control means to disappear after said connection has been released;
a step for causing said connection group control means after all of said produced connection control means have disappeared; and
a step for deleting said call control means when said call disappears.
